# EUROPEAN PATENT APPLICATION

(11) **EP 4 810 251 A1**
(43) Date of publication of application: **23.09.2026**
(21) Application number: 24891488.9
(22) Date of filing: 15.11.2024
(51) Int. Cl.: B32B 27/32, B65D 65/40

(54) **LAMINATED FILM AND PACKAGE**

(30) Priority: 16.11.2023 JP 2023195239
(71) Applicant: Sumitomo Bakelite Co.Ltd., Shinagawa-ku Tokyo 140-0002 (JP)
(72) Inventor: NAKADA Tomohiro, Tokyo 140-0002 (JP)
(74) Representative: Müller-Boré & Partner Patentanwälte PartG mbB
(86) International application number: PCT/JP2024/040555
(87) International publication number: WO 2025/105452

(57) **Abstract**

A laminated film includes: a first resin layer, a third resin layer, and a second resin layer that are laminated in this order in a thickness direction, in which the first resin layer, the second resin layer, and the third resin layer contain the same kind of polyolefin-based resin, a ratio of a thickness T₁₃ of the third resin layer to a thickness T₁ of the laminated film is more than 85%, when a Gelbo flex test is conducted on the laminated film under conditions of a temperature of 23°C and 2,000 twisting cycles in accordance with ASTM F392, the number of pinholes observed in the laminated film after the Gelbo flex test is 2 or less, and a puncture strength of the laminated film is 6 N or more.

## Description

### TECHNICAL FIELD

The present invention relates to a laminated film and a package.

Priority is claimed on Japanese Patent Application No. 2023-195239, filed November 16, 2023, the content of which is incorporated herein by reference.

### BACKGROUND ART

A laminated film formed by laminating a plurality of resin layers is widely used as a material for a package. A typical laminated film includes at least a sealant layer provided for heat-sealing an object to be sealed and an outer layer provided on a side opposite to a sealant layer side.

On the other hand, such laminated films for packaging applications are produced and consumed in large quantities every day all over the world because of their high convenience, generating a large amount of waste after use. From the viewpoint of improving the global environment, the generation of such waste has become an important issue to be addressed. In recent years, methods for reducing the amount of waste generated, as well as methods for reusing (recycling) the waste, have been actively studied.

For example, when main constituent materials of the plurality of resin layers in the laminated film are of the same kind, there is no need to separate and reuse each resin layer separately, and the entire laminated film can be easily reused, thereby increasing the usefulness.

As such a laminated film, a polyethylene laminate for a packaging material, which includes, for example, at least a stretched polyethylene film, an adhesive layer, and a heat-sealable polyethylene layer, in which the adhesive layer contains a solvent-free adhesive, is disclosed (see Patent Document 1).

### Citation List

### Patent Document

Patent Document 1: Japanese Unexamined Patent Application, First Publication No. 2019-189333

### SUMMARY OF INVENTION

### Technical Problem

On the other hand, the package may be required to have a higher strength than usual depending on the use thereof. For example, a package having excellent pinhole resistance in which pinhole generation in the package is suppressed in a case where the package is twisted and having excellent puncture strength in which a sharp portion is present in a storage item and even in a case where such a portion comes into contact with the package, damage to the package is suppressed is useful in a case where the object is packaged while maintaining a high level of hygiene.

However, the pinhole resistance and the puncture strength of the package are not always compatible with each other, and in many cases, increasing one results in a decrease in the other.

In addition, the laminated film described in Patent Document 1 cannot achieve both high pinhole resistance and high puncture strength of the package.

An object of the present invention is to provide a laminated film that can be used to produce a package having high pinhole resistance and high puncture strength and that has high reusability.

### Solution to Problem

In order to solve the above-described problems, the present invention adopts the following configurations.
[1] A laminated film including: a first resin layer, a third resin layer, and a second resin layer that are laminated in this order in a thickness direction, in which the first resin layer, the second resin layer, and the third resin layer contain the same kind of polyolefin-based resin, a ratio of a thickness of the third resin layer to a thickness of the laminated film is more than 85%, when a Gelbo flex test is conducted on the laminated film under conditions of a temperature of 23°C and 2,000 twisting cycles in accordance with ASTM F392, the number of pinholes observed in the laminated film after the Gelbo flex test is 2 or less, and a puncture strength of the laminated film is 6 N or more.
[2] The laminated film according to [1], in which the third resin layer contains, as the polyolefin-based resin, either one or both of linear low-density polyethylene having a constitutional unit derived from octene and metallocene-catalyzed linear low-density polyethylene having a constitutional unit derived from octene.
[3] The laminated film according to [1] or [2], in which the first resin layer is a non-easy-peel type sealant layer containing, as the polyolefin-based resin, one or two or more kinds selected from the group consisting of polyethylene and an ethylene-based copolymer.
[4] The laminated film according to [3], in which the first resin layer contains, as the polyolefin-based resin, one or two or more kinds selected from the group consisting of low-density polyethylene, linear low-density polyethylene, metallocene-catalyzed linear low-density polyethylene, and an ethylene-vinyl acetate copolymer.
[5] The laminated film according to [4], in which the second resin layer contains, as the polyolefin-based resin, high-density polyethylene and one or two or more kinds selected from the group consisting of low-density polyethylene, linear low-density polyethylene, and metallocene-catalyzed linear low-density polyethylene.
[6] The laminated film according to [1] or [2], in which the first resin layer is an easy-peel layer containing, as the polyolefin-based resin, one or two or more kinds selected from the group consisting of polyethylene and an ethylene-based copolymer, and one or two or more kinds selected from the group consisting of homopolypropylene and a polypropylene-based copolymer.
[7] The laminated film according to [6], in which the first resin layer contains, as the polyolefin-based resin, an ethylene-vinyl acetate copolymer and homopolypropylene.
[8] The laminated film according to [7], in which the second resin layer contains, as the polyolefin-based resin, high-density polyethylene, and one or two or more kinds selected from the group consisting of low-density polyethylene, linear low-density polyethylene, and metallocene-catalyzed linear low-density polyethylene.
[9] A package formed using the laminated film according to any one of [1] to [8].

### Advantageous Effects of Invention

According to the present invention, it is possible to provide a laminated film that can be used to produce a package having high pinhole resistance and high puncture strength and that has high reusability.

### BRIEF DESCRIPTION OF DRAWINGS

[FIG. 1] A cross-sectional view schematically showing an example of a laminated film according to an embodiment of the present invention.
[FIG. 2] A cross-sectional view schematically showing an example of a package according to the embodiment of the present invention.

### DESCRIPTION OF EMBODIMENTS

### <<Laminated Film>>

A laminated film according to an embodiment of the present invention is a laminated film including: a first resin layer, a third resin layer, and a second resin layer that are laminated in this order in a thickness direction, in which the first resin layer, the second resin layer, and the third resin layer contain the same kind of polyolefin-based resin, a ratio of a thickness of the third resin layer to a thickness of the laminated film is more than 85%, when a Gelbo flex test is conducted on the laminated film under conditions of a temperature of 23°C and 2,000 twisting cycles in accordance with ASTM F392, the number of pinholes observed in the laminated film after the Gelbo flex test is 2 or less, and a puncture strength of the laminated film is 6 N or more.

Since the first resin layer, the second resin layer, and the third resin layer of the laminated film of the present embodiment contain the same kind of polyolefin-based resin, the laminated film has high reusability.

The number of pinholes observed in the laminated film after the Gelbo flex test is conducted on the laminated film of the present embodiment is 2 or less, and the laminated film has high pinhole resistance, and the laminated can be used to produce a package having high pinhole resistance.

The puncture strength of the laminated film of the present embodiment is as high as 6 N or more, and the laminated film can be used to produce a package having high puncture strength.

In the laminated film of the present embodiment, the ratio of the thickness of the third resin layer to the thickness of the laminated film is more than 85% (85 < [thickness of third resin layer]/[thickness of laminated film] × 100), and thus the puncture strength and the pinhole resistance of the laminated film are high.

A resin film used higherto for producing a package has not necessarily been able to achieve both high pinhole resistance and high puncture strength.

On the other hand, the laminated film of the present embodiment has the above-described configuration, and thus has both high pinhole resistance and high puncture strength, so that the laminated film of the present embodiment can be used to produce a package having both high pinhole resistance and high puncture strength.

The first resin layer does not have to be an outermost layer of the laminated film of the present embodiment, but is preferably the outermost layer, and the first resin layer which is the outermost layer is suitable as, for example, a sealant layer.

The second resin layer does not have to be the outermost layer of the laminated film of the present embodiment, but is preferably the outermost layer, and the second resin layer which is the outermost layer is suitable as, for example, an outer layer.

The third resin layer corresponds to an interlayer.

Hereinafter, the overall configuration and characteristics of the laminated film of the present embodiment will be described.

### <Pinhole Resistance>

When a Gelbo flex test is conducted on the laminated film under conditions of a temperature of 23°C and 2,000 twisting cycles in accordance with ASTM F392, the number of pinholes observed in the laminated film after the Gelbo flex test is 2 or less, preferably 0 to 1, and more preferably 0.

The laminated film shows a result of the Gelbo flex test and has high pinhole resistance. That is, even when a twisting force is applied to the laminated film, the occurrence of pinholes (breakage) is suppressed, and high twisting resistance is achieved.

A size of a film to be subjected to the Gelbo flex test is not limited to the case of the laminated film of the present embodiment, and is preferably the A4 paper size standard (210 mm × 297 mm). In the present specification, a film having such a size may be referred to as a "first test piece".

The pinhole resistance (twisting resistance) of the laminated film of the present embodiment can be adjusted by, for example, adjusting the kinds or contents of components contained in each layer such as the first resin layer, the second resin layer, or the third resin layer constituting the laminated film, or the thickness of each layer. Among these, the pinhole resistance of the laminated film can be easily adjusted by adjusting the kinds or contents of the components contained in the second resin layer and the third resin layer, or the thicknesses of the second resin layer and the third resin layer. In particular, the pinhole resistance of the laminated film can be more easily adjusted by adjusting the kinds or contents of the components contained in the second resin layer or the thickness of the second resin layer.

### <Puncture Strength>

The puncture strength of the laminated film of the present embodiment is 6 N or more, preferably 8.5 N or more, and more preferably 10 N or more. The higher the puncture strength of the laminated film is, the higher the strength of the laminated film is. In addition, when the puncture strength of the laminated film is equal to or greater than the above lower limit, even in a case where a package obtained by packaging an intended object with the laminated film includes sharp portions in a storage item and such portions come into contact with the package (more specifically, a region formed of the laminated film of the present embodiment), damage to the package is suppressed.

An upper limit of the puncture strength of the laminated film of the present embodiment is not particularly limited. For example, the laminated film in which the puncture strength is 14 N or less can be more easily produced.

In one embodiment, the puncture strength may be, for example, any of 6 to 14 N, 8.5 to 14 N, and 10 to 14 N. However, these are examples of the puncture strength.

In the present embodiment, a tip part of a needle having a radius of curvature of 0.5 mm in the tip part is pushed perpendicularly to the laminated film from a second resin layer side at a speed of 50 mm/min, and at the moment when the needle penetrates the laminated film, a load applied to the needle is used as the puncture strength of the laminated film.

Examples of the needle include a needle made of stainless steel.

The puncture strength of the laminated film of the present embodiment can be adjusted by, for example, adjusting the kinds or contents of the components contained in each layer such as the first resin layer, the second resin layer, and the third resin layer constituting the laminated film, or the thickness of each layer. In particular, the puncture strength of the laminated film can be more easily adjusted by adjusting the kinds or contents of the components contained in the third resin layer or the thickness of the third resin layer.

### <Ratio of Thickness of Each Layer>

The ratio of the thickness of the third resin layer to the thickness of the laminated film ([thickness of third resin layer]/[thickness of laminated film] × 100) is more than 85%, and from the viewpoint of further enhancing the above-described effects, the ratio is preferably 87% or more, and more preferably 89% or more.

On the other hand, the ratio of the thickness of the third resin layer to the thickness of the laminated film is less than 100%, and is preferably 95% or less. When the ratio is within the above-described range, the effect obtained by the laminated film including the first resin layer and the second resin layer is further enhanced.

In one embodiment, the ratio of the thickness of the third resin layer to the thickness of the laminated film may be, for example, any of more than 85% and 95% or less, 87% to 95%, and 89% to 95%. However, these are examples of the ratio.

A ratio of the thickness of the first resin layer to the thickness of the laminated film ([thickness of first resin layer]/[thickness of laminated film] × 100) is preferably 7.5% or less, more preferably 6.5% or less, and still more preferably 5.5% or less, regardless of whether the first resin layer is a sealant layer or not (a non-easy-peel type sealant layer or an easy-peel layer described later). When the ratio is equal to or less than the upper limit, the effect obtained by the laminated film including the second resin layer and the third resin layer is further enhanced.

On the other hand, the ratio of the thickness of the first resin layer to the thickness of the laminated film is more than 0%, and preferably 1% or more. When the ratio is 1% or more, the effect obtained by the laminated film including the first resin layer is further enhanced. For example, in a case where the first resin layer is a sealant layer, in a package obtained by heat-sealing the laminated film or a formed body thereof with another resin film or a formed body thereof, sealing strength is further increased.

A ratio of the thickness of the second resin layer to the thickness of the laminated film ([thickness of second resin layer]/[thickness of laminated film] × 100) is preferably 7.5% or less, more preferably 6.5% or less, and still more preferably 5.5% or less. When the ratio is equal to or less than the upper limit, the effect obtained by the laminated film including the first resin layer and the third resin layer is further enhanced.

On the other hand, the ratio of the thickness of the second resin layer to the thickness of the laminated film is more than 0%, and preferably 1% or more. When the ratio is within the above-described range, the effect obtained by the laminated film including the second resin layer is further enhanced. For example, in a case where the second resin layer is an outer layer, the pinhole resistance of the laminated film and a package obtained using the laminated film is further increased. Further, by adjusting kinds and contents of the components contained in the second resin layer, formability of the laminated film is also improved. In this case, the package obtained by forming the laminated film can achieve a desired shape with high accuracy, for example, by suppressing thicknesses at corners from becoming excessively thin. Further, by adjusting the kinds and contents of the components contained in the second resin layer, heat resistance thereof is also increased, and heat resistance of the package obtained using the laminated film is also increased.

In the laminated film, a sum of the above-described ratio of the thickness of the first resin layer to the thickness of the laminated film, the above-described ratio of the thickness of the second resin layer to the thickness of the laminated film, and the above-described ratio of the thickness of the third resin layer to the thickness of the laminated film is not more than 100%.

In the laminated film, a ratio between [thickness of first resin layer]:[thickness of second resin layer] (ratio between thicknesses of first resin layer and second resin layer) is preferably 7:3 to 3:7, and more preferably 6:4 to 4:6. When the ratio is within the above-described range, the effect obtained by the laminated film including the first resin layer and the second resin layer is further enhanced.

Hereinafter, the present invention will be described in detail with reference to the drawings. In the drawings used in the following description, the main parts may be enlarged for convenience to make the features of the present invention easy to understand, and dimensional ratios of each constituent element may not be the same as actual ratios.

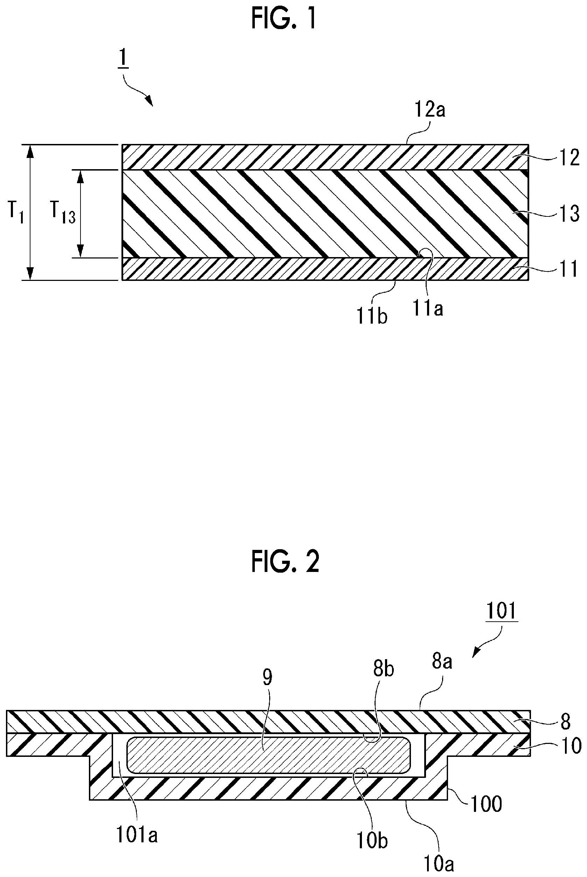

FIG. 1 is a cross-sectional view schematically showing an example of the laminated film of the present embodiment.

A laminated film 1 shown here is configured to include a first resin layer 11 and a second resin layer 12 provided on one surface (in the present specification, may be referred to as a "first surface") 11a of the first resin layer 11.

The laminated film 1 further includes a third resin layer 13 between the first resin layer 11 and the second resin layer 12.

That is, the laminated film 1 is configured by laminating the first resin layer 11, the third resin layer 13, and the second resin layer 12 in this order in a thickness direction.

The first resin layer 11 is one outermost layer of the laminated film 1.

The other surface (surface on a side opposite to a second resin layer 12 side; in the present specification, may be referred to as a "second surface") 11b of the first resin layer 11 is an exposed surface (one outermost surface). For example, in a case where the first resin layer 11 is a sealant layer, the second surface 11b of the first resin layer 11 is a sealing surface with another resin film or a formed body thereof. As will be described later, in a package formed by sealing the first resin layer 11 with another resin film or a formed body thereof, a non-sealed region of the second surface 11b of the first resin layer 11 forms a storage section in the package.

In the laminated film of the present embodiment, the outermost layer means a layer on the outermost side in a lamination direction of each layer constituting the laminated film, and the outermost surface means a surface (that is, an exposed surface) on the outermost side in the lamination direction of each layer constituting the laminated film.

The second resin layer 12 is the other outermost layer of the laminated film 1. One surface (surface on side opposite to a first resin layer 11 side; in the present specification, may be referred to as a "first surface") 12a of the second resin layer 12 is an exposed surface (the other outermost surface). For example, in a case where the second resin layer 12 is an outer layer, the first surface 12a of the second resin layer 12 becomes an exposed surface (the other outermost surface) even in the package configured as described above.

The first resin layer 11, the second resin layer 12, and the third resin layer 13 contain the same kind of polyolefin-based resin.

A ratio (T₁₃/T₁ × 100) of a thickness T₁₃ of the third resin layer 13 to a thickness T₁ of the laminated film 1 is more than 85%.

When a Gelbo flex test is conducted on the laminated film 1 or the first test piece thereof, the number of pinholes observed in the laminated film 1 or the first test piece thereof after the Gelbo flex test is 2 or less.

The puncture strength of the laminated film 1 is 6 N or more.

Next, each layer of the laminated film of the present embodiment will be described in detail.

### <First Resin Layer>

The first resin layer contains a polyolefin-based resin.

In the present specification, the polyolefin-based resin is not limited to the case of the first resin layer, and means a resin having a constitutional unit derived from an olefin.

In the first resin layer, a ratio of a total content of one or two or more kinds of components contained the first resin layer, which will be described later, to a total mass of the first resin layer is not more than 100% by mass.

Similarly, in a composition for forming a first resin layer described later, a ratio of a total content of one or two or more kinds of components contained in the composition for forming a first resin layer, which will be described later, to a total mass of the composition for forming a first resin layer is not more than 100% by mass.

The polyolefin-based resin contained in the first resin layer may be a homopolymer of one kind of olefin or a copolymer of two or more kinds of olefins.

Examples of the polyolefin-based resin contained in the first resin layer include a polyethylene-based resin (in the present specification, the polyethylene-based resin contained in the first resin layer may be particularly referred to as a "polyethylene-based resin (e1)"), and a polypropylene-based resin (in the present specification, the polypropylene-based resin contained in the first resin layer may be particularly referred to as a "polypropylene-based resin (p1)").

The polyethylene-based resin (polyethylene-based resin (e1)) contained in the first resin layer is a polymer (resin component) having a constitutional unit derived from ethylene, and may be polyethylene (PE, for example, a homopolymer of ethylene) or an ethylene-based copolymer having a constitutional unit derived from ethylene and a constitutional unit derived from a monomer other than ethylene.

However, not only in the case of the first resin layer, among polyolefin-based resins (olefin-based copolymers) having a constitutional unit derived from ethylene and a constitutional unit derived from propylene, a copolymer in which the number of constitutional units derived from propylene is larger than the number of constitutional units derived from ethylene is classified as a propylene-based copolymer.

Examples of the polyethylene (PE) among the polyethylene-based resins (e1) contained in the first resin layer include low-density polyethylene (LDPE), linear low-density polyethylene (LLDPE), metallocene-catalyzed linear low-density polyethylene (mLLDPE), medium-density polyethylene (MDPE), and high-density polyethylene (HDPE), and low-density polyethylene, linear low-density polyethylene, or metallocene-catalyzed linear low-density polyethylene is preferable.

In the present specification, densities of low-density polyethylene (LDPE), linear low-density polyethylene (LLDPE), and metallocene-catalyzed linear low-density polyethylene (mLLDPE) are 0.910 g/cm³ or more and less than 0.945 g/cm³.

The density of medium-density polyethylene (MDPE) is 0.945 g/cm³ or more and less than 0.955 g/cm³. The density of high-density polyethylene (HDPE) is 0.955 g/cm³ or more.

More preferred examples of the polyethylene contained in the first resin layer include polyethylene having a constitutional unit derived from octene, such as linear low-density polyethylene (hereinafter, may be referred to as "C8-LLDPE" in the present specification) having a constitutional unit derived from octene (C₈H₁₆), and metallocene-catalyzed linear low-density polyethylene (hereinafter, may be referred to as "C8-mLLDPE" in the present specification) having a constitutional unit derived from octene (C₈H₁₆).

In the present specification, C8-LLDPE is a subordinate concept of LLDPE (linear low-density polyethylene), and linear low-density polyethylene is a concept including linear low-density polyethylene having a constitutional unit derived from octene and other linear low-density polyethylenes.

Similarly, C8-mLLDPE is a subordinate concept of mLLDPE (metallocene-catalyzed linear low-density polyethylene), and metallocene-catalyzed linear low-density polyethylene is a concept including metallocene-catalyzed linear low-density polyethylene having a constitutional unit derived from octene and other metallocene-catalyzed linear low-density polyethylenes.

The ethylene-based copolymer contained in the first resin layer is preferably a resin other than an ethylene-vinyl alcohol copolymer (EVOH).

Examples of the ethylene-based copolymer contained in the first resin layer include an ethylene-vinyl acetate copolymer (EVA), an ethylene-vinyl alcohol-vinyl acetate copolymer (also known as a partially saponified product of ethylene-vinyl acetate copolymer, which may be referred to as "partially saponified EVA" in the present specification), an ethylene-vinyl alcohol copolymer (EVOH, also known as a saponified product of ethylene-vinyl acetate copolymer, which may be referred to as "saponified EVA" in the present specification), an ethylene-methyl acrylate copolymer (EMA), an ethylene-methyl methacrylate copolymer (EMMA), an ethylene-ethyl acrylate copolymer (EEA), an ethylene-acrylate copolymer (EAA), an ethylene-methyl acrylate copolymer (EMAA), an ethylene-ethyl acrylate-maleic acid anhydride copolymer (E-EA-MAH), and an ionomer (ION).

Examples of the ionomer include a resin having an ionically crosslinked structure formed by salt formation between metal ions and acid groups in a copolymer of ethylene and a small amount of acrylic acid or methacrylic acid.

The polypropylene-based resin (polypropylene-based resin (p1)) contained in the first resin layer is a polymer (resin component) having a constitutional unit derived from propylene, and may be a homopolymer of propylene (homopolypropylene, hPP) or a polypropylene-based copolymer having a constitutional unit derived from propylene and a constitutional unit derived from a monomer other than propylene.

Examples of the propylene-based copolymer contained in the first resin layer include a propylene-ethylene random copolymer (also known as a polypropylene random copolymer (rPP)) and a propylene-ethylene block copolymer (also known as a polypropylene block copolymer (bPP)).

The polyolefin-based resin contained in the first resin layer may be only one kind or two or more kinds. In a case where two or more kinds are used, the combination and ratio of these can be optionally selected according to the purpose.

A melting point of the polyolefin-based resin contained in the first resin layer is preferably 75°C to 130°C, more preferably 80°C to 128°C, and still more preferably 85°C to 126°C. When the melting point of the polyolefin-based resin is within the above-described range, properties of the first resin layer are further improved. For example, in a case where the first resin layer is a sealant layer, when the melting point of the polyolefin-based resin is equal to or higher than the lower limit, the sealing strength of the laminated film with an object to be heat-sealed is further increased within an appropriate range. When the melting point of the polyolefin-based resin is equal to or lower than the upper limit, the effect of suppressing the melting of an object to be heat-sealed during the heat-sealing of the laminated film is further increased.

In the present specification, the "melting point" means a value measured in accordance with JIS K 7121 unless otherwise specified.

A melt flow rate (hereinafter, also referred to as "MFR") of the polyolefin-based resin contained in the first resin layer is preferably 2 to 20 g/10 min, more preferably 2.5 to 16 g/10 min, and still more preferably 3 to 14 g/10 min. When the MFR of the polyolefin-based resin is within the above-described range, the properties of the first resin layer are further improved. For example, when the MFR of the polyolefin-based resin is equal to or greater than the lower limit, variation in the thickness of the first resin layer is highly suppressed. On the other hand, when the MFR of the polyolefin-based resin is equal to or lower than the upper limit, during the heat-forming of the laminated film, adhesion of foreign matter originating from the laminated film to a hot plate for forming is suppressed, and contamination of forming equipment is highly suppressed.

In the present specification, "MFR" means a value measured in accordance with JIS K 6922-1 unless otherwise specified.

The first resin layer may or may not contain other components that do not correspond to the polyolefin-based resin, as long as the effects of the present invention are not impaired.

The other components contained in the first resin layer may be either a resin component (may be referred to as "the other resin component" in the present specification) and a non-resin component (may be referred to as "the other non-resin component" in the present specification).

The other resin component contained in the first resin layer is not particularly limited as long as the other resin component is a resin other than the polyolefin-based resin.

Examples of the other non-resin component contained in the first resin layer include additives known in the field.

Examples of the additives include anti-fogging agents, anti-blocking agents, antioxidants, antistatic agents, crystal nucleating agents, inorganic particles, viscosity-reducing agents, thickeners, heat stabilizers, lubricants, infrared absorbers, and ultraviolet absorbers.

The other component contained in the first resin layer may be only one kind or may be two or more kinds. In a case where two or more kinds are used, the combination and ratio of these can be optionally selected according to the purpose.

The first resin layer contains the same kind of polyolefin-based resin as the polyolefin-based resins contained in the second resin layer and the third resin layer, which will be described later.

In the present specification, the term "same kind of resin" is not limited to the case of polyolefin-based resins, and means that, when resins having common constitutional units are compared with each other, a ratio of the amount (mol) of the common constitutional units to a total amount (mol) of the constitutional units is 20 mol% or more in both resins. For example, low-density polyethylene (LDPE), linear low-density polyethylene (LLDPE), metallocene-catalyzed linear low-density polyethylene (mLLDPE), medium-density polyethylene (MDPE), high-density polyethylene (HDPE), an ethylene-methyl acrylate copolymer (EMA resin), an ethylene-methyl methacrylate copolymer (EMMA resin), an ethylene-vinyl alcohol copolymer (EVOH, saponified EVA), an ethylene-vinyl acetate copolymer (EVA), an ethylene-vinyl alcohol-vinyl acetate copolymer (partially saponified EVA), and other polymers all have a ratio of an amount (mol) of constitutional units derived from ethylene of 20 mol% or more to a total amount (mol) of the constitutional units, and are therefore considered to be of the same kind. On the other hand, for example, among a propylene-ethylene random copolymer (rPP), a propylene-ethylene block copolymer (bPP), and other copolymers, a copolymer in which the ratio of the amount (mol) of the constitutional units derived from ethylene to the total amount (mol) of the constitutional units of less than 20 mol% are not considered to be of the same kind as the above-described low-density polyethylene or the like.

In the present embodiment, in any of the resins of the same kind, a ratio of the amount (mol) of the common constitutional units to the total amount (mol) of the constitutional units is preferably 30 mol% or more, more preferably 40 mol% or more, and still more preferably 50 mol% or more, and may be, for example, any of 60 mol% or more, 70 mol% or more, and 80 mol% or more. On the other hand, the ratio is less than 100 mol%.

The same kind of polyolefin-based resin contained in the first resin layer may be only one kind or may be two or more kinds. In a case where two or more kinds are used, the combination and ratio of these can be optionally selected according to the purpose.

In the first resin layer, a ratio of a content of the polyolefin-based resin to the total mass of the first resin layer ([content (parts by mass) of polyolefin-based resin in first resin layer]/[total mass (parts by mass) of first resin layer] × 100) is preferably 90% to 100% by mass, more preferably 95% to 100% by mass, and may be, for example, any of 97% to 100% by mass and 99% to 100% by mass. When the ratio is equal to or more than the lower limit, the effect obtained by the first resin layer containing the polyolefin-based resin is further enhanced.

The ratio is usually the same as a ratio of the content of the polyolefin-based resin to a total content (parts by mass) of components that do not vaporize at room temperature in the composition for forming a first resin layer, which will be described later ([content (parts by mass) of polyolefin-based resin in composition for forming first resin layer]/[total content (parts by mass) of components that do not vaporize at room temperature in composition for forming first resin layer] × 100).

In the present specification, unless otherwise specified, the content of the polyolefin-based resin in the first resin layer means the total content of the polyolefin-based resin of the same kind as the polyolefin-based resins contained in the second resin layer and the third resin layer, and other polyolefin-based resins in the first resin layer.

In the present specification, the term "room temperature" means a temperature that is not particularly cooled or heated, that is, a normal temperature, and examples thereof include a temperature of 15°C to 25°C.

In the first resin layer, a ratio of a total content of the polyethylene-based resin (e1) and the polypropylene-based resin (p1) to the content of the polyolefin-based resin (([content (parts by mass) of polyethylene-based resin (e1) in first resin layer] + [content (parts by mass) of polypropylene-based resin (p1) in first resin layer])/[content (parts by mass) of polyolefin-based resin in first resin layer] × 100) is preferably 80% by mass or more, and more preferably 90% by mass or more, and may be, for example, any of 95% by mass or more, 97% by mass or more, and 99% by mass or more. When the ratio is equal to or more than the lower limit, the effect obtained by the first resin layer containing the polyethylene-based resin (e1) or the polypropylene-based resin (p1) is further enhanced. For example, such a first resin layer is suitable as a sealant layer, and in this case, the sealing properties of a package obtained by heat-sealing the laminated film or a formed body thereof with another resin film or a formed body thereof are further improved.

On the other hand, the ratio is 100% by mass or less.

The ratio is usually the same as a ratio of a total content (parts by mass) of the polyethylene-based resin (e1) and the polypropylene-based resin (p1) to the content (parts by mass) of the polyolefin-based resin in the composition for forming a first resin layer described below (([content (parts by mass) of polyethylene-based resin (e1) in composition for forming first resin layer] + [content (parts by mass) of polypropylene-based resin (p1) in composition for forming first resin layer]/[content (parts by mass) of polyolefin-based resin in composition for forming first resin layer]) × 100).

Here, in a case where the first resin layer or the composition for forming a first resin layer does not contain the polyethylene-based resin (e1), the content of the polyethylene-based resin (e1) in the first resin layer or in the composition for forming a first resin layer is 0 parts by mass. In a case where the first resin layer or the composition for forming a first resin layer does not contain the polypropylene-based resin (p1), the content of the polypropylene-based resin (p1) in the first resin layer or in the composition for forming a first resin layer is 0 parts by mass.

In the first resin layer, a ratio of a content of the same kind of polyolefin-based resin as the polyolefin-based resins contained in the second resin layer and the third resin layer to the total mass of the first resin layer ([content (parts by mass) of the same kind of polyolefin-based resin as polyolefin-based resins contained in second resin layer and third resin layer]/[total mass (parts by mass) of first resin layer] × 100) is preferably 80% to 100% by mass, and more preferably 90% to 100% by mass, and may be, for example, any of 95% to 100% by mass and 99% to 100% by mass. When the ratio is equal to or more than the lower limit, the recyclability of the laminated film is further improved.

The ratio is usually the same as a ratio of the content (parts by mass) of the same kind of polyolefin-based resin as the polyolefin-based resins contained in the second resin layer and the third resin layer to the total content (parts by mass) of components that do not vaporize at room temperature in the composition for forming a first resin layer described below ([content (parts by mass) of the same kind of polyolefin-based resin as polyolefin-based resin contained in the second resin layer and the third resin layer in composition for forming first resin layer]/[total content (parts by mass) of components that do not vaporize at room temperature in composition for forming first resin layer] × 100).

In a case where the first resin layer is a sealant layer, the sealant layer may be a non-easy-peel type sealant layer (complete seal type sealant layer) or an easy-peel type sealant layer (easy-peel layer).

It is preferable that the first resin layer which is a non-easy-peel type sealant layer is a non-easy-peel type sealant layer containing, as the polyolefin-based resin, one or two or more kinds (that is, the polyethylene-based resin (e1)) selected from the group consisting of polyethylene and an ethylene-based copolymer.

It is preferable that the first resin layer which is a non-easy-peel type sealant layer contains, as the polyolefin-based resin, one or two or more kinds selected from the group consisting of low-density polyethylene, linear low-density polyethylene, metallocene-catalyzed linear low-density polyethylene, and an ethylene-vinyl acetate copolymer.

It is preferable that the linear low-density polyethylene (LLDPE) contained in the first resin layer which is a non-easy-peel type sealant layer is linear low-density polyethylene (C8-LLDPE) having a constitutional unit derived from octene.

It is preferable that the metallocene-catalyzed linear low-density polyethylene (mLLDPE) contained in the first resin layer which is a non-easy-peel type sealant layer is metallocene-catalyzed linear low-density polyethylene (C8-mLLDPE) having a constitutional unit derived from octene.

That is, it is more preferable that the first resin layer which is a non-easy-peel type sealant layer contains, as the polyolefin-based resin, one or two or more kinds selected from the group consisting of low-density polyethylene, linear low-density polyethylene having a constitutional unit derived from octene, metallocene-catalyzed linear low-density polyethylene having a constitutional unit derived from octene, and an ethylene-vinyl acetate copolymer.

In a case where the first resin layer which is a non-easy-peel type sealant layer contains the polyethylene-based resin (e1) as the polyolefin-based resin, in the first resin layer, a ratio of a content of the polyethylene-based resin (e1) to the content of the polyolefin-based resin in the first resin layer ([content (parts by mass) of polyethylene-based resin (e1) in first resin layer]/[content (parts by mass) of polyolefin-based resin in first resin layer] × 100) is preferably 80% by mass or more, and more preferably 90% by mass or more, and may be, for example, any of 95% by mass or more, 97% by mass or more, and 99% by mass or more. When the ratio is equal to or more than the lower limit, the first resin layer becomes a superior layer as a non-easy-peel type sealant layer.

On the other hand, the ratio is 100% by mass or less.

The ratio is usually the same as a ratio of the content of the polyethylene-based resin (e1) to the content (parts by mass) of the polyolefin-based resin in the composition for forming a first resin layer, which will be described later ([content (parts by mass) of polyethylene-based resin (e1) in composition for forming first resin layer]/[content (parts by mass) of polyolefin-based resin in composition for forming first resin layer] × 100).

In a case where the first resin layer which is a non-easy-peel type sealant layer contains, as the polyolefin-based resin, one or two or more kinds selected from the group consisting of low-density polyethylene, linear low-density polyethylene, metallocene-catalyzed linear low-density polyethylene, and an ethylene-vinyl acetate copolymer, in the first resin layer, a ratio of a total content of the low-density polyethylene, the linear low-density polyethylene, the metallocene-catalyzed linear low-density polyethylene, and the ethylene-vinyl acetate copolymer to the content of the polyolefin-based resin in the first resin layer (([content (parts by mass) of low-density polyethylene in first resin layer] + [content (parts by mass) of linear low-density polyethylene in first resin layer] + [content (parts by mass) of metallocene-catalyzed linear low-density polyethylene in first resin layer] + [content (parts by mass) of ethylene-vinyl acetate copolymer in first resin layer])/[content (parts by mass) of polyolefin-based resin in first resin layer] × 100) is preferably 80% by mass or more, and more preferably 90% by mass or more, and may be, for example, any of 95% by mass or more, 97% by mass or more, and 99% by mass or more. When the ratio is equal to or more than the lower limit, the first resin layer becomes a superior layer as a non-easy-peel type sealant layer.

On the other hand, the ratio is 100% by mass or less.

The ratio is usually the same as a ratio of a total content of low-density polyethylene, linear low-density polyethylene, metallocene-catalyzed linear low-density polyethylene, and an ethylene-vinyl acetate copolymer to the content (parts by mass) of the polyolefin-based resin in the composition for forming a first resin layer, which will be described later (([content (parts by mass) of low-density polyethylene in composition for forming first resin layer] + [content (parts by mass) of linear low-density polyethylene in composition for forming first resin layer] + [content (parts by mass) of metallocene-catalyzed linear low-density polyethylene in composition for forming first resin layer] + [content (parts by mass) of ethylene-vinyl acetate copolymer in composition for forming first resin layer])/[content (parts by mass) of polyolefin-based resin in composition for forming first resin layer] × 100).

Here, in a case where the first resin layer or the composition for forming a first resin layer does not contain any component selected from the group consisting of low-density polyethylene, linear low-density polyethylene, metallocene-catalyzed linear low-density polyethylene, and an ethylene-vinyl acetate copolymer, a content of the component in the first resin layer or in the composition for forming a first resin layer is 0 parts by mass.

As described above, the first resin layer which is a non-easy-peel type sealant layer may or may not include other components which do not correspond to the polyolefin-based resin, as long as the effects of the present invention are not impaired.

In a case where the first resin layer is an easy-peel layer, it is preferable that the first resin layer contains two kinds of incompatible polyolefin-based resins. Such a first resin layer is suitable as an easy-peel layer that exhibits peelability due to cohesive failure.

It is preferable that the first resin layer which is an easy-peel layer is an easy-peel layer containing, as the two kinds of incompatible polyolefin-based resins, one or two or more kinds selected from the group consisting of polyethylene and an ethylene-based copolymer (that is, the polyethylene-based resin (e1)), and one or two or more kinds selected from the group consisting of homopolypropylene and a polypropylene-based copolymer (that is, the polypropylene-based resin (p1)).

In the first resin layer (easy-peel layer) containing two kinds of incompatible polyolefin-based resins, a ratio of a content of the polyethylene-based resin (e1) to a total content of the polyethylene-based resin (e1) and the polypropylene-based resin (p1) ([content (parts by mass) of polyethylene-based resin (e1) in first resin layer]/([content (parts by mass) of polyethylene-based resin (e1) in first resin layer] + [content (parts by mass) of polypropylene-based resin (p1) in first resin layer]) × 100) is preferably 60% to 90% by mass, and may be, for example, any of 70% to 90% by mass or 80% to 90% by mass, may be any of 60% to 80% by mass or 60% to 70% by mass, or may be 70% to 80% by mass.

In a case where the first resin layer which is an easy-peel layer contains the polyethylene-based resin (e1) and the polypropylene-based resin (p1) as the polyolefin-based resin, a ratio of the total content of the polyethylene-based resin (e1) and the polypropylene-based resin (p1) to the content of the polyolefin-based resin in the first resin layer (([content (parts by mass) of polyethylene-based resin (e1) in first resin layer] + [content (parts by mass) of polypropylene-based resin (p1) in first resin layer]/[content (parts by mass) of polyolefin-based resin in first resin layer] × 100) is the same as the ratio of the total content of the polyethylene-based resin (e1) and the polypropylene-based resin (p1) to the content of the polyolefin-based resin in the first resin layer described above. When the ratio is equal to or more than the lower limit, the first resin layer becomes a superior layer as an easy-peel layer. In addition, even in a case where the first resin layer is an easy-peel layer, the ratio is 100% by mass or less.

It is preferable that the first resin layer which is an easy-peel layer contains an ethylene-vinyl acetate copolymer and homopolypropylene as the polyolefin-based resin.

In the first resin layer (easy-peel layer) containing two kinds of incompatible polyolefin-based resins, a ratio of a content of the ethylene-vinyl acetate copolymer to a total content of the ethylene-vinyl acetate copolymer and the homopolypropylene ([content (parts by mass) of ethylene-vinyl acetate copolymer in first resin layer]/([content (parts by mass) of ethylene-vinyl acetate copolymer in first resin layer] + [content (parts by mass) of homopolypropylene in first resin layer]) × 100) is preferably 60% to 90% by mass, and may be, for example, any of 70% to 90% by mass and 80% to 90% by mass, any of 60% to 80% by mass and 60% to 70% by mass, or 70% to 80% by mass.

In a case where the first resin layer as the easy-peel layer contains an ethylene-vinyl acetate copolymer and homopolypropylene as the polyolefin-based resin, in the first resin layer, a ratio of a total content of the ethylene-vinyl acetate copolymer and the homopolypropylene to a content of the polyolefin-based resin in the first resin layer (([content (parts by mass) of ethylene-vinyl acetate copolymer in first resin layer] + [content (parts by mass) of homopolypropylene in first resin layer])/[content (parts by mass) of polyolefin-based resin in first resin layer] × 100) is preferably 80% by mass or more, more preferably 90% by mass or more, and may be, for example, any of 95% by mass or more, 97% by mass or more, and 99% by mass or more. When the ratio is equal to or more than the lower limit, the first resin layer becomes a superior layer as an easy-peel layer.

On the other hand, the ratio is 100% by mass or less. The ratio is usually the same as a ratio of a total content of the ethylene-vinyl acetate copolymer and the homopolypropylene to the content (parts by mass) of the polyolefin-based resin in the composition for forming a first resin layer, which will be described later (([content (parts by mass) of ethylene-vinyl acetate copolymer in composition for forming first resin layer] + [content (parts by mass) of homopolypropylene in composition for forming first resin layer])/[content (parts by mass) of polyolefin-based resin in composition for forming first resin layer] × 100).

As described above, the first resin layer which is an easy-peel layer may or may not include other components that do not correspond to the polyolefin-based resin, as long as the effects of the present invention are not impaired.

The first resin layer may consist of one layer (single layer) or may consist of two or more layers, regardless of whether the first resin layer is a non-easy-peel type sealant layer or an easy-peel layer. In a case where the first resin layer consists of a plurality of layers, the plurality of layers may be the same or different from each other, and a combination of the plurality of layers is not particularly limited as long as the effects of the present invention are not impaired.

The first resin layer preferably consists of one layer (single layer).

In the present specification, the expression "plurality of layers may be the same or different from each other" is not limited to the case of the first resin layer, and means that "all of the layers may be the same, all of the layers may be different from each other, or only some of the layers may be the same", and furthermore, the expression "plurality of layers are different from each other" means that "at least one of a constituent material or a thickness of each layer is different from those of the other layers".

The thickness of the first resin layer can be optionally set depending on the use of the laminated film and the thickness of the laminated film, regardless of whether the first resin layer is a non-easy-peel type sealant layer or an easy-peel layer, and is not particularly limited.

The thickness of the first resin layer is preferably 20 µm or less, and may be, for example, any of 15 µm or less and 10 µm or less. When the thickness of the first resin layer is equal to or less than the upper limit, the thickness of the laminated film can be further reduced. In a case where the thicknesses of the second resin layer and the third resin layer are within numerical ranges described later, the thickness of the first resin layer equal to or less than the upper limit is particularly suitable, and in this case, the effect obtained by the laminated film including the second resin layer and the third resin layer is further enhanced.

On the other hand, the thickness of the first resin layer is preferably 1 µm or more, and may be, for example, any of 1.5 µm or more and 2 µm or more. When the thickness of the first resin layer is equal to or greater than the lower limit, the effect obtained by the laminated film including the first resin layer is further enhanced. For example, in a case where the first resin layer is a sealant layer, in a package obtained by heat-sealing the laminated film or a formed body thereof with another resin film or a formed body thereof, the sealing strength is further increased.

In a case where the first resin layer consists of a plurality of layers, it is preferable that a total thickness of the plurality of layers is within the above-described numerical range.

The thickness of the first resin layer shown here is particularly suitable in a case where the thickness of the laminated film is 60 to 250 µm, as will be described later.

The first resin layer is preferably a non-stretched layer (film). When the first resin layer is a non-stretched layer, the formability of the laminated film is further improved.

### <Second Resin Layer>

The second resin layer contains the same kind of polyolefin-based resin as the polyolefin-based resins contained in the first resin layer and the third resin layer described later.

In the second resin layer, a ratio of a total content of one or two or more kinds of components contained in the second resin layer, which will be described later, to a total mass of the second resin layer is not more than 100% by mass.

Similarly, in a composition for forming a second resin layer described later, a ratio of a total content of one or two or more kinds of components contained in the composition for forming a second resin layer, which will be described later, to a total mass of the composition for forming a second resin layer is not more than 100% by mass.

Examples of the polyolefin-based resin contained in the second resin layer include the same ones as those of the polyolefin-based resin contained in the first resin layer described above.

For example, the polyolefin-based resin contained in the second resin layer may be a homopolymer of one kind of olefin or a copolymer of two or more kinds of olefins.

Examples of the polyolefin-based resin contained in the second resin layer include a polyethylene-based resin (in the present specification, the polyethylene-based resin contained in the second resin layer may be particularly referred to as a "polyethylene-based resin (e2)"), and a polypropylene-based resin (in the present specification, the polypropylene-based resin contained in the second resin layer may be particularly referred to as a "polypropylene-based resin (p2)").

For example, the polyethylene-based resin (polyethylene-based resin (e2)) contained in the second resin layer is the same as the polyethylene-based resin (polyethylene-based resin (e1)) contained in the first resin layer, and may be polyethylene (PE, for example, a homopolymer of ethylene) or an ethylene-based copolymer having a constitutional unit derived from ethylene and a constitutional unit derived from a monomer other than ethylene.

Examples of the polyethylene (PE) and the ethylene-based copolymer contained in the second resin layer include the same ones as those of the polyethylene (PE) and the ethylene-based copolymer contained in the first resin layer.

For example, the polypropylene-based resin (polypropylene-based resin (p2)) contained in the second resin layer is the same as the polypropylene-based resin (polypropylene-based resin (p1)) contained in the first resin layer, and may be a homopolymer of propylene (homopolypropylene, hPP) or a polypropylene-based copolymer having a constitutional unit derived from propylene and a constitutional unit derived from a monomer other than propylene.

Examples of the propylene-based copolymer contained in the second resin layer include the same ones as those of the propylene-based copolymer contained in the first resin layer.

The polyolefin-based resin contained in the second resin layer may be only one kind or may be two or more kinds. In a case where two or more kinds are used, the combination and ratio of these can be optionally selected according to the purpose.

The second resin layer may or may not include other components that do not correspond to the polyolefin-based resin, as long as the effects of the present invention are not impaired.

The other components may be any of a resin component (may be referred to as "another resin component" in the present specification) and a non-resin component (may be referred to as "another non-resin component" in the present specification).

Examples of the other resin component and the other non-resin component contained in the second resin layer include the same ones as the other resin component and the other non-resin component contained in the first resin layer, respectively.

The other component contained in the second resin layer may be only one kind or may be two or more kinds. In a case where two or more kinds are used, the combination and ratio of these can be optionally selected according to the purpose.

The same kind of polyolefin-based resin contained in the second resin layer may be only one kind or may be two or more kinds. In a case where two or more kinds are used, the combination and ratio of these can be optionally selected according to the purpose.

In the second resin layer, a ratio of the content of the polyolefin-based resin to the total mass of the second resin layer is preferably 90% to 100% by mass, and more preferably 95% to 100% by mass, and may be, for example, any of 97% to 100% by mass and 99% to 100% by mass. When the ratio is equal to or more than the lower limit, the effect obtained by the second resin layer containing the polyolefin-based resin is further enhanced.

The ratio is usually the same as a ratio of the content of the polyolefin-based resin to a total content (parts by mass) of components that do not vaporize at room temperature in the composition for forming a second resin layer, which will be described later.

In the present specification, unless otherwise specified, the content of the polyolefin-based resin in the second resin layer means the total content of the same kind of polyolefin-based resin as the polyolefin-based resins contained in the first resin layer and the third resin layer, and other polyolefin-based resins in the second resin layer.

It is preferable that the polyolefin-based resin contained in the second resin layer is a polyethylene-based resin (e2) (either one or both of polyethylene and an ethylene-based copolymer).

In the second resin layer, a ratio of the content of the polyethylene-based resin (e2) to the content of the polyolefin-based resin is preferably 80% by mass or more, and more preferably 90% by mass or more, and may be, for example, any of 95% by mass or more, 97% by mass or more, and 99% by mass or more. When the ratio is equal to or more than the lower limit, the effect obtained by the second resin layer containing the polyethylene-based resin (e2) is further enhanced. For example, the pinhole resistance of such a second resin layer and the laminated film including the second resin layer is further increased. In addition, the pinhole resistance of the package obtained using such a laminated film is also further increased.

On the other hand, the ratio is 100% by mass or less.

The ratio is usually the same as a ratio of the content (parts by mass) of the polyethylene-based resin (e2) to the content (parts by mass) of the polyolefin-based resin in the composition for forming a second resin layer, which will be described later.

In the second resin layer, a ratio of a content of the same kind of polyolefin-based resin as the polyolefin-based resins contained in the first resin layer and the third resin layer to the total mass of the second resin layer is preferably 80% to 100% by mass and more preferably 90% to 100% by mass, and may be, for example, any of 95% to 100% by mass and 99% to 100% by mass. When the ratio is equal to or more than the lower limit, the recyclability of the laminated film is further improved.

The ratio is usually the same as a ratio of the content (parts by mass) of the same kind of polyolefin-based resin as the polyolefin-based resins contained in the first resin layer and the third resin layer to a total content (parts by mass) of components that do not vaporize at room temperature in the composition for forming a second resin layer, which will be described later.

It is more preferable that the polyolefin-based resin contained in the second resin layer is polyethylene.

More preferred examples of the second resin layer include a second resin layer containing, as the polyolefin-based resin, high-density polyethylene and one or two or more kinds selected from the group consisting of low-density polyethylene, linear low-density polyethylene, and metallocene-catalyzed linear low-density polyethylene.

Such a second resin layer containing polyethylene classified into two groups is particularly suitable as an outer layer. When the second resin layer contains high-density polyethylene, the heat resistance of the second resin layer is further increased, and the heat resistance of the laminated film and the package including such a second resin layer is also further increased. On the other hand, when the second resin layer includes one or two or more kinds selected from the group consisting of low-density polyethylene, linear low-density polyethylene, and metallocene-catalyzed linear low-density polyethylene, the pinhole resistance and formability are further improved. In addition, the pinhole resistance and formability of the laminated film and the package including such a second resin layer are also further improved.

The linear low-density polyethylene contained in the second resin layer is preferably linear low-density polyethylene (C8-LLDPE) having a constitutional unit derived from octene, and the metallocene-catalyzed linear low-density polyethylene is preferably metallocene-catalyzed linear low-density polyethylene (C8-mLLDPE) having a constitutional unit derived from octene.

That is, more preferred examples of the second resin layer include a second resin layer containing, as the polyolefin-based resin, high-density polyethylene and one or two or more kinds selected from the group consisting of low-density polyethylene, linear low-density polyethylene having a constitutional unit derived from octene, and metallocene-catalyzed linear low-density polyethylene having a constitutional unit derived from octene.

In a case where the second resin layer contains, as the polyolefin-based resin, high-density polyethylene and one or two or more kinds selected from the group consisting of low-density polyethylene, linear low-density polyethylene, and metallocene-catalyzed linear low-density polyethylene, in the second resin layer, a ratio of a total content of the high-density polyethylene, the low-density polyethylene, the linear low-density polyethylene, and the metallocene-catalyzed linear low-density polyethylene to the content of the polyolefin-based resin ([[content (parts by mass) of high-density polyethylene in second resin layer] + [content (parts by mass) of low-density polyethylene in second resin layer] + [content (parts by mass) of linear low-density polyethylene in second resin layer] + [content (parts by mass) of metallocene-catalyzed linear low-density polyethylene in second resin layer]]/[content (parts by mass) of polyolefin-based resin in second resin layer] × 100) is preferably 80% by mass or more, and more preferably 90% by mass or more, and may be, for example, any of 95% by mass or more, 97% by mass or more, and 99% by mass or more. When the ratio is equal to or more than the lower limit, the heat resistance, pinhole resistance, and formability of such a second resin layer and the laminated film including the second resin layer are further improved. In addition, even in a package obtained using such a laminated film, the heat resistance and the pinhole resistance are further improved, and thus a desired shape can be realized with high accuracy.

On the other hand, the ratio is 100% by mass or less.

The ratio is usually the same as a ratio of the total content of high-density polyethylene, low-density polyethylene, linear low-density polyethylene, and metallocene-catalyzed linear low-density polyethylene to the content of the polyolefin-based resin in the composition for forming a second resin layer, which will be described later ([[content (parts by mass) of high-density polyethylene in composition for forming second resin layer] + [content (parts by mass) of low-density polyethylene in composition for forming second resin layer] + [content (parts by mass) of linear low-density polyethylene in composition for forming second resin layer] + [content (parts by mass) of metallocene-catalyzed linear low-density polyethylene in composition for forming second resin layer]]/[content (parts by mass) of polyolefin-based resin in composition for forming second resin layer] × 100).

Here, in a case where the second resin layer or the composition for forming a second resin layer does not contain any component selected from the group consisting of low-density polyethylene, linear low-density polyethylene, and metallocene-catalyzed linear low-density polyethylene, a content of the component in the second resin layer or in the composition for forming a second resin layer is 0 parts by mass.

In a case where the second resin layer contains, as the polyolefin-based resin, high-density polyethylene and one or two or more kinds selected from the group consisting of low-density polyethylene, linear low-density polyethylene, and metallocene-catalyzed linear low-density polyethylene, in the second resin layer, a ratio of the content of the high-density polyethylene to the total content of the high-density polyethylene, the low-density polyethylene, the linear low-density polyethylene, and the metallocene-catalyzed linear low-density polyethylene([content (parts by mass) of high-density polyethylene in second resin layer]/([content (parts by mass) of high-density polyethylene in second resin layer] + [content (parts by mass) of low-density polyethylene in second resin layer] + [content of linear low-density polyethylene in second resin layer (parts by mass)] + [content of metallocene-catalyzed linear low-density polyethylene in second resin layer (parts by mass)]) × 100) is preferably 10% by mass or more, more preferably 20% by mass or more, and still more preferably 30% by mass or more. When the ratio is equal to or more than the lower limit, the effect obtained by the second resin layer containing high-density polyethylene is further enhanced. That is, the heat resistance of the second resin layer, the laminated film, and the package is further increased.

On the other hand, the ratio is preferably 90% by mass or less, more preferably 80% by mass or less, and still more preferably 70% by mass or less. When the ratio is equal to or less than the upper limit, the effect obtained by the second resin layer containing low-density polyethylene, linear low-density polyethylene, or metallocene-catalyzed linear low-density polyethylene is further enhanced. That is, the pinhole resistance and formability of the second resin layer and the laminated film are further improved. In addition, even in the package, the pinhole resistance is further improved, and a desired shape can be realized with high accuracy.

The ratio is usually the same as a ratio of the content of the high-density polyethylene to the total content of the high-density polyethylene, the low-density polyethylene, the linear low-density polyethylene, and the metallocene-catalyzed linear low-density polyethylene in the composition for forming a second resin layer, which will be described later ([content of high-density polyethylene in composition for forming second resin layer (parts by mass)]/[content (parts by mass) of high-density polyethylene in composition for forming second resin layer + [content (parts by mass) of low-density polyethylene in composition for forming second resin layer] + [content (parts by mass) of linear low-density polyethylene in composition for forming second resin layer] + [content (parts by mass) of metallocene-catalyzed linear low-density polyethylene in composition for forming second resin layer] × 100]). Here, in a case where the second resin layer or the composition for forming a second resin layer does not contain any component selected from the group consisting of low-density polyethylene, linear low-density polyethylene, and metallocene-catalyzed linear low-density polyethylene, a content of the component in the second resin layer or in the composition for forming a second resin layer is 0 parts by mass.

In a case where the second resin layer contains, as the polyolefin-based resin, either one or both of linear low-density polyethylene and metallocene-catalyzed linear low-density polyethylene, in the second resin layer, a ratio of a total content of linear low-density polyethylene (C8-LLDPE) having a constitutional unit derived from octene and metallocene-catalyzed linear low-density polyethylene (C8-mLLDPE) having a constitutional unit derived from octene to a total content of the linear low-density polyethylene and the metallocene-catalyzed linear low-density polyethylene (([content (parts by mass) of C8-LLDPE in second resin layer] + [content (parts by mass) of C8-mLLDPE in second resin layer]/([content (parts by mass) of LLDPE in second resin layer] + [content (parts by mass) of mLLDPE in second resin layer]) × 100) is preferably 80% by mass or more, and more preferably 90% by mass or more, and may be, for example, any of 95% by mass or more, 97% by mass or more, and 99% by mass or more. When the ratio is equal to or more than the lower limit, the heat resistance, pinhole resistance, and formability of the laminated film including the second resin layer are further improved. In addition, even in a package obtained using such a laminated film, the heat resistance and pinhole resistance are further improved, and thus a desired shape can be realized with high accuracy.

On the other hand, the ratio is 100% by mass or less.

The ratio is usually the same as a ratio of the total content of linear low-density polyethylene having a constitutional unit derived from octene (C8-LLDPE) and metallocene-catalyzed linear low-density polyethylene having a constitutional unit derived from octene (C8-mLLDPE) to the total content of linear low-density polyethylene and metallocene-catalyzed linear low-density polyethylene in the composition for forming a second resin layer, which will be described later, (([content (parts by mass) of C8-LLDPE in composition for forming second resin layer] + [content (parts by mass) of C8-mLLDPE in composition for forming second resin layer])/([content (parts by mass) of LLDPE in composition for forming second resin layer] + [content (parts by mass) of mLLDPE in composition for forming second resin layer]) × 100).

Here, in a case where the second resin layer or the composition for forming a second resin layer does not contain any component selected from the group consisting of linear low-density polyethylene, metallocene-catalyzed linear low-density polyethylene, linear low-density polyethylene having a constitutional unit derived from octene, and metallocene-catalyzed linear low-density polyethylene having a constitutional unit derived from octene, a content of the component in the second resin layer or in the composition for forming a second resin layer is 0 parts by mass.

The second resin layer may consist of one layer (single layer) or may consist of two or more layers. In a case where the second resin layer consists of a plurality of layers, the plurality of layers may be the same or different from each other, and a combination of the plurality of layers is not particularly limited as long as the effects of the present invention are not impaired.

The second resin layer preferably consists of one layer (single layer).

The thickness of the second resin layer can be optionally set depending on the use of the laminated film and the thickness of the laminated film, and is not particularly limited.

The thickness of the second resin layer is preferably 20 µm or less, and may be, for example, any of 15 µm or less and 10 µm or less. When the thickness of the second resin layer is equal to or less than the upper limit, the thickness of the laminated film can be further reduced. In a case where the thickness of the first resin layer is within the above-described numerical range and the thickness of the third resin layer is within a numerical range described later, the thickness of the second resin layer which is equal to or less than the upper limit is particularly suitable, and in this case, the effect obtained by the laminated film including the first resin layer and the third resin layer is further enhanced.

On the other hand, the thickness of the second resin layer is preferably 1 µm or more, and may be, for example, any of 1.5 µm or more and 2 µm or more. When the thickness of the second resin layer is equal to or greater than the lower limit, the effect obtained by the laminated film including the second resin layer is further enhanced. For example, the pinhole resistance of the laminated film is further improved.

In a case where the second resin layer consists of a plurality of layers, it is preferable that a total thickness of the plurality of layers is within the above-described numerical range.

The thickness of the second resin layer shown here is particularly suitable in a case where the thickness of the laminated film is 60 to 250 µm, as will be described later.

The second resin layer is preferably a non-stretched layer (film). When the second resin layer is a non-stretched layer, the formability of the laminated film is further improved.

### <Third Resin Layer>

The third resin layer contains the same kind of polyolefin-based resin as the polyolefin-based resins contained in the first resin layer and the second resin layer.

In the third resin layer, a ratio of a total content of one or two or more kinds of components contained in the third resin layer, which will be described later, to a total mass of the third resin layer is not more than 100% by mass.

Similarly, in a composition for forming a third resin layer described later, a ratio of a total content of one or two or more kinds of components contained in the composition for forming a third resin layer, which will be described later, to a total mass of the composition for forming a third resin layer is not more than 100% by mass.

Examples of the polyolefin-based resin contained in the third resin layer include the same ones as those of the polyolefin-based resin contained in the first resin layer described above.

For example, the polyolefin-based resin contained in the third resin layer may be a homopolymer of one kind of olefin or a copolymer of two or more kinds of olefins.

Examples of the polyolefin-based resin contained in the third resin layer include a polyethylene-based resin (in the present specification, the polyethylene-based resin contained in the third resin layer may be particularly referred to as a "polyethylene-based resin (e3)"), and a polypropylene-based resin (in the present specification, the polypropylene-based resin contained in the third resin layer may be particularly referred to as a "polypropylene-based resin (p3)").

For example, the polyethylene-based resin (polyethylene-based resin (e3)) contained in the third resin layer is the same as the polyethylene-based resin (polyethylene-based resin (e1)) contained in the first resin layer, and may be polyethylene (PE, for example, a homopolymer of ethylene) or an ethylene-based copolymer having a constitutional unit derived from ethylene and a constitutional unit derived from a monomer other than ethylene.

Examples of the polyethylene (PE) and the ethylene-based copolymer contained in the third resin layer include the same ones as those of the polyethylene (PE) and the ethylene-based copolymer contained in the first resin layer.

For example, the polypropylene-based resin (polypropylene-based resin (p3)) contained in the third resin layer is the same as the polypropylene-based resin (polypropylene-based resin (p1)) contained in the first resin layer, and may be a homopolymer of propylene (homopolypropylene, hPP) or a polypropylene-based copolymer having a constitutional unit derived from propylene and a constitutional unit derived from a monomer other than propylene.

Examples of the propylene-based copolymer contained in the third resin layer include the same ones as those of the propylene-based copolymer contained in the first resin layer.

The polyolefin-based resin contained in the third resin layer may be only one kind or may be two or more kinds. In a case where two or more kinds are used, the combination and ratio of these can be optionally selected according to the purpose.

The third resin layer may or may not include other components that do not correspond to the polyolefin-based resin, as long as the effects of the present invention are not impaired.

The other components may be any of a resin component (may be referred to as "another resin component" in the present specification) and a non-resin component (may be referred to as "another non-resin component" in the present specification).

Examples of the other resin component and the other non-resin component contained in the third resin layer include the same components as the other resin component and the other non-resin component contained in the first resin layer, respectively.

The other component contained in the third resin layer may be only one kind or may be two or more kinds. In a case where two or more kinds are used, the combination and ratio of these can be optionally selected according to the purpose.

The same kind of polyolefin-based resin contained in the third resin layer may be only one kind or may be two or more kinds. In a case where two or more kinds are used, the combination and ratio of these can be optionally selected according to the purpose.

In the third resin layer, a ratio of the content of the polyolefin-based resin to the total mass of the third resin layer is preferably 90% to 100% by mass, and more preferably 95% to 100% by mass, and may be, for example, any of 97% to 100% by mass and 99% to 100% by mass. When the ratio is equal to or more than the lower limit, the effect obtained by the third resin layer containing the polyolefin-based resin is further enhanced.

The ratio is usually the same as a ratio of the content of the polyolefin-based resin with respect to a total content (parts by mass) of components that do not vaporize at room temperature in the composition for forming a third resin layer, which will be described later.

In the present specification, unless otherwise specified, the content of the polyolefin-based resin in the third resin layer means the total content of the same kind of polyolefin-based resin as the polyolefin-based resins contained in the first resin layer and the second resin layer, and the other polyolefin-based resins in the third resin layer.

It is preferable that the polyolefin-based resin contained in the third resin layer is a resin other than the adhesive resin (adhesive polyolefin-based resin). In addition, it is preferable that a content of the adhesive resin in the third resin layer is lower, and it is particularly preferable that the third resin layer does not contain the adhesive resin. In such a package, the effect obtained by providing the third resin layer is further enhanced. Examples of the adhesive resin include known resins, and more specific examples thereof include modified polyolefins such as an acid-modified polyolefin having an acidic group.

In the third resin layer, a ratio of the content of the adhesive resin to the total mass of the third resin layer is preferably 0% to 5% by mass, more preferably 0% to 3% by mass, and still more preferably 0% to 1% by mass.

It is preferable that the polyolefin-based resin contained in the third resin layer is a polyethylene-based resin (e3) (either one or both of a polyethylene and an ethylene-based copolymer).

In the third resin layer, a ratio of the content of the polyethylene-based resin (e3) to the content of the polyolefin-based resin is preferably 80% by mass or more, and more preferably 90% by mass or more, and may be, for example, any of 95% by mass or more, 97% by mass or more, and 99% by mass or more. When the ratio is equal to or more than the lower limit, the effect obtained by the third resin layer containing the polyethylene-based resin (e3) is further enhanced. For example, the puncture strength of the third resin layer, the laminated film including the third resin layer, and the package obtained using the laminated film is further increased.

On the other hand, the ratio is 100% by mass or less.

The ratio is usually the same as a ratio of the content (parts by mass) of the polyethylene-based resin (e3) to the content (parts by mass) of the polyolefin-based resin in the composition for forming a third resin layer, which will be described later.

In the third resin layer, a ratio of a content of the same kind of polyolefin-based resin as the polyolefin-based resins contained in the first resin layer and the second resin layer to the total mass of the third resin layer is preferably 80% to 100% by mass and more preferably 90% to 100% by mass, and may be, for example, any of 95% to 100% by mass and 99% to 100% by mass. When the ratio is equal to or more than the lower limit, the recyclability of the laminated film is further improved.

The ratio is usually the same as a ratio of the content (parts by mass) of the same kind of polyolefin-based resin as the polyolefin-based resins contained in the first resin layer and the second resin layer to a total content (parts by mass) of components that do not vaporize at room temperature in the composition for forming a third resin layer, which will be described later.

It is more preferable that the polyolefin-based resin contained in the third resin layer is polyethylene.

More preferred examples of the third resin layer include a third resin layer containing, as the polyolefin-based resin, either one or both of linear low-density polyethylene and metallocene-catalyzed linear low-density polyethylene. The puncture strength of the third resin layer, the laminated film including the third resin layer, and the package obtained using the laminated film are further increased.

The linear low-density polyethylene contained in the third resin layer is preferably linear low-density polyethylene (C8-LLDPE) having a constitutional unit derived from octene, and the metallocene-catalyzed linear low-density polyethylene is preferably metallocene-catalyzed linear low-density polyethylene (C8-mLLDPE) having a constitutional unit derived from octene.

That is, more preferred examples of the third resin layer include a third resin layer containing, as the polyolefin-based resin, either one or both of linear low-density polyethylene (C8-LLDPE) having a constitutional unit derived from octene or metallocene-catalyzed linear low-density polyethylene (C8-mLLDPE) having a constitutional unit derived from octene.

The puncture strength of the laminated film including the third resin layer is particularly high.

In a case where the third resin layer contains, as the polyolefin-based resin, either one or both of linear low-density polyethylene and metallocene-catalyzed linear low-density polyethylene, in the third resin layer, a ratio of a total content of the linear low-density polyethylene and the metallocene-catalyzed linear low-density polyethylene to the content of the polyolefin-based resin (([content (parts by mass) of linear low-density polyethylene in third resin layer] + [content (parts by mass) of metallocene-catalyzed linear low-density polyethylene in third resin layer])/[content (parts by mass) of polyolefin-based resin in third resin layer] × 100) is preferably 80% by mass or more, and more preferably 90% by mass or more, and may be, for example, any of 95% by mass or more, 97% by mass or more, and 99% by mass or more. When the ratio is equal to or more than the lower limit, the puncture strength of the third resin layer, the laminated film including the third resin layer, and the package obtained using the laminated film is further increased.

On the other hand, the ratio is 100% by mass or less.

The ratio is usually the same as a ratio of the total content of linear low-density polyethylene and metallocene-catalyzed linear low-density polyethylene to the content of the polyolefin-based resin in the composition for forming a third resin layer, which will be described later ([[content (parts by mass) of linear low-density polyethylene in composition for forming third resin layer] + [content (parts by mass) of metallocene-catalyzed linear low-density polyethylene in composition for forming third resin layer]]/[content (parts by mass) of polyolefin-based resin in composition for forming third resin layer] × 100).

Here, the content of the linear low-density polyethylene in the third resin layer and the composition for forming a third resin layer is the total content of linear low-density polyethylene having a constitutional unit derived from octene and other linear low-density polyethylenes in the third resin layer and the composition for forming a third resin layer. Similarly, the content of the metallocene-catalyzed linear low-density polyethylene in the third resin layer and the composition for forming a third resin layer is the total content of the metallocene-catalyzed linear low-density polyethylene having a constitutional unit derived from octene and other metallocene-catalyzed linear low-density polyethylenes in the third resin layer and the composition for forming a third resin layer.

In addition, in a case where the third resin layer or the composition for forming a third resin layer does not contain any component selected from the group consisting of linear low-density polyethylene having a constitutional unit derived from octene, other linear low-density polyethylenes, metallocene-catalyzed linear low-density polyethylene having a constitutional unit derived from octene, and other metallocene-catalyzed linear low-density polyethylenes, a content of the component in the third resin layer or in the composition for forming a third resin layer is 0 parts by mass.

In a case where the third resin layer contains, as the polyolefin-based resin, either one or both of linear low-density polyethylene and metallocene-catalyzed linear low-density polyethylene, in the third resin layer, a ratio of a total content of linear low-density polyethylene (C8-LLDPE) having a constitutional unit derived from octene and metallocene-catalyzed linear low-density polyethylene (C8-mLLDPE) having a constitutional unit derived from octene to a total content of the linear low-density polyethylene and the metallocene-catalyzed linear low-density polyethylene (([content (parts by mass) of C8-LLDPE in third resin layer] + [content (parts by mass) of C8-mLLDPE in third resin layer]/([content (parts by mass) of LLDPE in third resin layer] + [content (parts by mass) of mLLDPE in third resin layer]) × 100) is preferably 50% by mass or more, and may be, for example, any of 75% by mass or more, 80% by mass or more, 90% by mass or more, 95% by mass or more, 97% by mass or more, and 99% by mass or more. When the ratio is equal to or more than the lower limit, the puncture strength of the third resin layer, the laminated film including the third resin layer, and the package obtained using the laminated film becomes particularly high.

On the other hand, the ratio is 100% by mass or less.

The ratio is usually the same as a ratio of the total content of linear low-density polyethylene having a constitutional unit derived from octene (C8-LLDPE) and metallocene-catalyzed linear low-density polyethylene having a constitutional unit derived from octene (C8-mLLDPE) to the total content of linear low-density polyethylene and metallocene-catalyzed linear low-density polyethylene in the composition for forming a third resin layer, which will be described later, (([content (parts by mass) of C8-LLDPE in composition for forming third resin layer] + [content (parts by mass) of C8-mLLDPE in composition for forming third resin layer])/([content (parts by mass) of LLDPE in composition for forming third resin layer] + [content (parts by mass) of mLLDPE in composition for forming third resin layer]) × 100).

Here, in a case where the third resin layer or the composition for forming a third resin layer does not contain any component selected from the group consisting of linear low-density polyethylene, metallocene-catalyzed linear low-density polyethylene, linear low-density polyethylene having a constitutional unit derived from octene, and metallocene-catalyzed linear low-density polyethylene having a constitutional unit derived from octene, a content of the component of the third resin layer or in the composition for forming a third resin layer is 0 parts by mass.

The third resin layer may consist of one layer (single layer) or may consist of two or more layers. In a case where the third resin layer consists of a plurality of layers, the plurality of layers may be the same or different from each other, and a combination of the plurality of layers is not particularly limited as long as the effects of the present invention are not impaired.

The third resin layer preferably consists of one layer (single layer).

The thickness of the third resin layer can be optionally set depending on the use of the laminated film and the thickness of the laminated film, and is not particularly limited.

The thickness of the third resin layer is preferably 50 µm or more, and may be, for example, any of 100 µm or more and 150 µm or more. When the thickness of the third resin layer is equal to or greater than the lower limit, the effect obtained by the laminated film including the third resin layer is further enhanced. That is, the puncture strength between the laminated film and the package obtained using the laminated film is further increased.

On the other hand, the thickness of the third resin layer is preferably 240 µm or less, and may be, for example, any of 185 µm or less and 125 µm or less. When the thickness of the third resin layer is equal to or less than the upper limit, the thickness of the laminated film can be further reduced. In a case where the thicknesses of the first resin layer and the second resin layer are within the above-described numerical ranges, the thickness of the third resin layer equal to or less than the upper limit is particularly suitable, and in this case, the effect obtained by the laminated film including the first resin layer and the second resin layer is further enhanced.

In a case where the third resin layer consists of a plurality of layers, it is preferable that the total thickness of the plurality of layers is within the above-described numerical range.

The thickness of the third resin layer shown here is particularly suitable in a case where the thickness of the laminated film is 60 to 250 µm, as will be described later.

The third resin layer is preferably a non-stretched layer (film). When the third resin layer is a non-stretched layer, the formability of the laminated film is further improved.

### <Other Layer>

The laminated film of the present embodiment may include another layer that does not fall under any of the first resin layer, the second resin layer, and the third resin layer as long as the effects of the present invention are not impaired; however, it is preferable that no other layer is provided.

The other layer is a layer that does not contain the same kind of polyolefin-based resin, and when the laminated film does not include such another layer, the reusability is further improved and the puncture strength and pinhole resistance can be more easily adjusted.

### <Overall Configuration of Laminated Film>

The thickness (overall thickness) of the laminated film is not particularly limited, but is preferably 60 to 250 µm, and may be, for example, any of 60 to 130 µm, 120 to 190 µm, and 180 to 250 µm. When the thickness of the laminated film is equal to or greater than the lower limit, the strength of the laminated film becomes higher. When the thickness of the laminated film is equal to or less than the upper limit, the laminated film can be thinned.

In the laminated film, it is preferable that all the layers (for example, the first resin layer, the second resin layer, and the third resin layer) constituting the laminated film are non-stretched layers (films). Such a non-stretched laminated film has particularly excellent formability and is suitable for forming, for example, a deep-drawn package.

It is preferable that the first resin layer, the second resin layer, and the third resin layer each contain a polyethylene-based resin as the same kind of polyolefin-based resin.

In this case, for example, it is preferable that the first resin layer contains, as the same kind of polyolefin-based resin, one or two or more kinds selected from the group consisting of low-density polyethylene, linear low-density polyethylene, metallocene-catalyzed linear low-density polyethylene, and an ethylene-vinyl acetate copolymer, the second resin layer contains, as the same kind of polyolefin-based resin, one or two or more kinds selected from the group consisting of high-density polyethylene, low-density polyethylene, linear low-density polyethylene, and metallocene-catalyzed linear low-density polyethylene, and the third resin layer contains, as the same kind of polyolefin-based resin, either one or both of linear low-density polyethylene and metallocene-catalyzed linear low-density polyethylene.

Furthermore, in this case, in each of the first resin layer, the second resin layer, and the third resin layer, a part or all of the linear low-density polyethylene may be linear low-density polyethylene (C8-LLDPE) having a constitutional unit derived from octene, and a part or all of the metallocene-catalyzed linear low-density polyethylene may be metallocene-catalyzed linear low-density polyethylene (C8-mLLDPE) having a constitutional unit derived from octene.

A preferred example of the laminated film of the present embodiment is a laminated film including: a first resin layer, a third resin layer, and a second resin layer that are laminated in this order in a thickness direction, in which
the first resin layer, the second resin layer, and the third resin layer contain the same kind of polyolefin-based resin,
a ratio of a thickness of the third resin layer to a thickness of the laminated film is more than 85%,
a ratio of a thickness of the first resin layer to a thickness of the laminated film is 7.5% or less, and
a ratio of a thickness of the second resin layer to the thickness of the laminated film is 7.5% or less,
when a Gelbo flex test is conducted on the laminated film under conditions of a temperature of 23°C and 2,000 twisting cycles in accordance with ASTM F392, the number of pinholes observed in the laminated film after the Gelbo flex test is 2 or less,
a puncture strength of the laminated film is 6 N or more,
the second resin layer and the third resin layer contain a polyethylene-based resin as the polyolefin-based resin,
the first resin layer is a non-easy-peel type sealant layer containing a polyethylene-based resin as the polyolefin-based resin or an easy-peel layer containing a polyethylene-based resin and a polypropylene-based resin as the polyolefin-based resin, and
the first resin layer, the second resin layer, and the third resin layer each contain a polyethylene-based resin as the same kind of polyolefin-based resin.

A more preferred example of the laminated film of the present embodiment is a laminated film including: a first resin layer, a third resin layer, and a second resin layer that are laminated in this order in a thickness direction,
the first resin layer, the second resin layer, and the third resin layer contain the same kind of polyolefin-based resin,
a ratio of a thickness of the third resin layer to a thickness of the laminated film is more than 85%,
a ratio of a thickness of the first resin layer to the thickness of the laminated film is 7.5% or less,
a ratio of a thickness of the second resin layer to the thickness of the laminated film is 7.5% or less,
when a Gelbo flex test is conducted on the laminated film under conditions of a temperature of 23°C and 2,000 twisting cycles in accordance with ASTM F392, the number of pinholes observed in the laminated film after the Gelbo flex test is 2 or less,
a puncture strength of the laminated film is 6 N or more,
the second resin layer contains, as the polyolefin-based resin, high-density polyethylene and one or two or more kinds selected from the group consisting of low-density polyethylene, linear low-density polyethylene, and metallocene-catalyzed linear low-density polyethylene,
the third resin layer contains, as the polyolefin-based resin, either one or both of linear low-density polyethylene and metallocene-catalyzed linear low-density polyethylene,
the first resin layer is a non-easy-peel type sealant layer containing, as the polyolefin-based resin, one or two or more kinds selected from the group consisting of polyethylene and an ethylene-based copolymer, or an easy-peel layer containing, as the polyolefin-based resin, one or two or more kinds selected from the group consisting of polyethylene and an ethylene-based copolymer and one or two or more kinds selected from the group consisting of homopolypropylene and a polypropylene-based copolymer, and
the first resin layer contains, as the same kind of polyolefin-based resin, one or two or more kinds selected from the group consisting of polyethylene and an ethylene-based copolymer, the second resin layer contains, as the same kind of polyolefin-based resin, one or two or more kinds selected from the group consisting of high-density polyethylene, low-density polyethylene, linear low-density polyethylene, and metallocene-catalyzed linear low-density polyethylene, and the third resin layer contains, as the same kind of polyolefin-based resin, either one or both of linear low-density polyethylene and metallocene-catalyzed linear low-density polyethylene.

A still more preferred example of the laminated film of the present embodiment is a laminated film including: a first resin layer, a third resin layer, and a second resin layer that are laminated in this order in a thickness direction,
the first resin layer, the second resin layer, and the third resin layer contain the same kind of polyolefin-based resin
a ratio of a thickness of the third resin layer to a thickness of the laminated film is more than 85%,
a ratio of a thickness of the first resin layer to the thickness of the laminated film is 7.5% or less,
a ratio of a thickness of the second resin layer to the thickness of the laminated film is 7.5% or less,
when a Gelbo flex test is conducted on the laminated film under conditions of a temperature of 23°C and 2,000 twisting cycles in accordance with ASTM F392, the number of pinholes observed in the laminated film after the Gelbo flex test is 2 or less,
a puncture strength of the laminated film is 6 N or more,
the second resin layer contains, as the polyolefin-based resin, high-density polyethylene and one or two or more kinds selected from the group consisting of low-density polyethylene, linear low-density polyethylene, and metallocene-catalyzed linear low-density polyethylene,
the third resin layer contains, as the polyolefin-based resin, either one or both of linear low-density polyethylene having a constitutional unit derived from octene and metallocene-catalyzed linear low-density polyethylene having a constitutional unit derived from octene,
the first resin layer is a non-easy-peel type sealant layer containing, as the polyolefin-based resin, one or two or more kinds selected from the group consisting of low-density polyethylene, linear low-density polyethylene, metallocene-catalyzed linear low-density polyethylene, and an ethylene-vinyl acetate copolymer, or an easy-peel layer containing, as the polyolefin-based resin, one or two or more kinds selected from the group consisting of an ethylene-vinyl acetate copolymer and homopolypropylene, and
the first resin layer contains, as the same kind of polyolefin-based resin, one or two or more kinds selected from the group consisting of the low-density polyethylene, the linear low-density polyethylene, the metallocene-catalyzed linear low-density polyethylene, and the ethylene-vinyl acetate copolymer, the second resin layer contains, as the same kind of polyolefin-based resin, one or two or more kinds selected from the group consisting of the high-density polyethylene, the low-density polyethylene, the linear low-density polyethylene, and the metallocene-catalyzed linear low-density polyethylene, and the third resin layer contains, as the same kind of polyolefin-based resin, either one or both of the linear low-density polyethylene having a constitutional unit derived from octene and the metallocene-catalyzed linear low-density polyethylene having a constitutional unit derived from octene,

In such a laminated film, a part or all of the linear low-density polyethylene contained in the first resin layer may be linear low-density polyethylene having a constitutional unit derived from octene, a part or all of the metallocene-catalyzed linear low-density polyethylene may be metallocene-catalyzed linear low-density polyethylene having a constitutional unit derived from octene, a part or all of the linear low-density polyethylene contained in the second resin layer may be linear low-density polyethylene having a constitutional unit derived from octene, and a part or all of the metallocene-catalyzed linear low-density polyethylene may be metallocene-catalyzed linear low-density polyethylene having a constitutional unit derived from octene.

Furthermore, in the laminated film, a part or all of the linear low-density polyethylene contained in the first resin layer and the second resin layer as the same kind of polyolefin-based resin may be linear low-density polyethylene having a constitutional unit derived from octene, and a part or all of the metallocene-catalyzed linear low-density polyethylene may be metallocene-catalyzed linear low-density polyethylene having a constitutional unit derived from octene.

### <<Method of Producing Laminated Film>>

The laminated film can be produced by, for example, a feed block method of melt-extruding a resin material for forming each layer, a resin composition, or the like by using a number of extruders, a co-extrusion T-die method such as a multi-manifold method, or an air-cooled or water-cooled co-extrusion inflation method.

In a case of using the resin composition, for example, a blend (a dry blend material or a non-kneaded material) of two or more components may be directly fed into an extruder as the resin composition, or a pre-kneaded material obtained by kneading two or more components in advance may be fed into the extruder as the resin composition.

The pre-kneaded material is obtained, for example, by melt-kneading two or more components using a device such as a twin-screw extruder or a Banbury mixer.

The laminated film can be produced by separately preparing two or more films for forming any two or more of the layers in the laminated film in advance, bonding laminating the layers together by a thermal (heat) lamination method or the like without using an adhesive, and further laminating other layers as necessary to achieve a desired arrangement form.

The resin composition used as a material for forming any of the layers in the laminated film may be produced by adjusting kinds and contents of components to be contained so that a layer to be formed contains desired components in desired contents. For example, a ratio between contents of components that do not vaporize at room temperature in the resin composition is usually the same as a ratio between contents of the components in a layer formed from the resin composition.

The resin composition (in the present specification, may be referred to as a "resin composition for forming a first resin layer") for forming the first resin layer (the first resin layer 11 in the laminated film 1 shown in FIG. 1), the resin composition (in the present specification, may be referred to as a "resin composition for forming a second resin layer") for forming the second resin layer (the second resin layer 12 in the laminated film 1 shown in FIG. 1), and the resin composition (in the present specification, may be referred to as a "resin composition for forming a third resin layer") for forming the third resin layer (the third resin layer 13 in the laminated film 1 shown in FIG. 1) each include a resin composition containing the polyolefin-based resin and, as necessary, the other components. The other components are the components described above.

### <<Package>>

A package according to an embodiment of the present invention is formed using the above-described laminated film according to the embodiment of the present invention.

Since the package of the present embodiment is formed using the laminated film, the package has high pinhole resistance, and for example, even in a case where a twisting force is applied to the package, the occurrence of pinholes (damage) is suppressed, so that the package has high twisting resistance. Further, the package of the present embodiment has high puncture strength, and for example, even in a case where a sharp portion is present in a storage item and such a portion comes into contact with the package, damage to the package is suppressed.

Further, by using the laminated film having high formability or heat resistance, it is also possible to increase the formability or heat resistance of the package of the present embodiment.

Since the package of the present embodiment has the above-described properties, the package of the present embodiment is useful, for example, as a package for packaging an object while maintaining a high level of hygiene, and is particularly useful for packaging medical devices such as a catheter and a syringe.

The package of the present embodiment may be a known package except that the laminated film is used.

A preferred example of the package of the present embodiment includes a package that includes a lid material and a base material, and is formed by sealing the lid material and the base material, in which either one or both of the lid material and the base material are formed using the laminated film.

Examples of the base material include a formed body of a resin film having a recessed portion for forming a storage section in a package. The resin film may be the laminated film or may be a resin film other than the laminated film.

Since the laminated film can have high formability during thermoforming, a more preferred example of the package includes a package in which the base material is a formed body of the laminated film. That is, a more preferred example of the package of the present embodiment includes a package that includes a lid material and a base material, is formed by sealing the lid material and the base material, and has the base material as a formed body of the laminated film.

In a case where the base material is a formed body of the laminated film, the lid material may be the laminated film or a resin film other than the laminated film. On the other hand, in a case where the base material is not a formed body of the laminated film, the lid material is the laminated film.

The base material is preferably a deep-drawn formed body of the laminated film or another resin film, and more preferably a deep-drawn formed body of the laminated film.

That is, the package according to the present embodiment including the lid material and the base material is preferably a deep-drawn package, and more preferably a deep-drawn package in which the base material is a deep-drawn formed body of the laminated film. In such a deep-drawn package, by using the laminated film having high pinhole resistance and high puncture strength and further having high formability, a desired shape can be realized with high accuracy in the base material. Further, it is also possible to increase the heat resistance of the base material.

FIG. 2 is a cross-sectional view schematically showing an example of the package of the present embodiment.

In FIG. 2, the same components as those shown in FIG. 1 are denoted by the same reference numerals as those in FIG. 1, and detailed description thereof will be omitted.

A package 101 shown in FIG. 2 is configured to include a lid material 8 and a base material 10. The base material 10 is formed using the laminated film 1 shown in FIG. 1, and more specifically, is a formed body (heat-formed body) of the laminated film 1.

In the base material 10 in FIG. 2, a distinction between the layers constituting the laminated film 1 is omitted.

The base material 10 has a recessed portion 100 formed therein.

One surface (hereinafter, may be referred to as a "second surface" in the present specification) 10b of the base material 10 and one surface (hereinafter, may be referred to as a "second surface" in the present specification) 8b of the lid material 8 are both sealing surfaces, and these sealing surfaces face each other in the package 101.

In the package 101, a region of the second surface 10b of the base material 10 excluding the region where the recessed portion 100 is formed and a region of the second surface 8b of the lid material 8 close to a peripheral edge portion overlap each other. Then, among the overlapping regions of the base material 10 and the lid material 8, at least the regions near the peripheral edge portion are sealed together to form the package 101. As a result, in the region of the recessed portion 100 of the base material 10, a storage section 101a is formed between the second surface 10b of the base material 10 and the second surface 8b of the lid material 8. A storage item 9 is stored in the storage section 101a.

A thickness of a flat portion of the base material 10 may be the same as the thickness of the laminated film described above.

A thickness of the lid material 8 is preferably 50 to 300 µm.

It is preferable that the second surface 10b of the base material 10 is the same as the second surface 11b of the first resin layer 11 in the laminated film 1. It is preferable that the other surface (in the present specification, may be referred to as a "first surface") 10a of the base material 10 is the same as the first surface 12a of the second resin layer 12 in the laminated film 1.

The lid material 8 may be the laminated film or may be a resin film other than the laminated film.

In a case where the lid material 8 is the laminated film, the lid material 8 may be the laminated film 1 shown in FIG. 1 or may be the other laminated films.

In the storage section 101a of the package 101 shown in FIG. 2, although some gaps can be seen between the storage item 9 and the base material 10 and between the storage item 9 and the lid material 8, the gaps are not essential for the package 101 in which the storage item 9 is stored.

The package of the present embodiment is not limited to the package 101 shown in FIG. 2, and for example, a part of the configuration of the package 101 may be changed, deleted, or added without departing from the gist of the present invention.

For example, in the package 101, the base material 10 is formed using the laminated film 1 shown in FIG. 1, but may be formed using the laminated film of the present embodiment other than the laminated film 1.

For example, in the package 101, the base material 10 is formed using the laminated film 1 shown in FIG. 1, but may be formed using a resin film other than the laminated film of the present embodiment. However, in this case, the lid material 8 is the laminated film of the present embodiment.

### <<Method of Producing Package>>

The package can be produced by packaging an object to be packaged (in other words, a storage item) using the laminated film.

The package can be produced in the same manner as in the case of a package in the related art, except that the laminated film is used instead of a resin film in the related art.

When producing the package, the first resin layer in the laminated film or the formed body thereof is disposed to face an object to be packaged, and the second resin layer is disposed to face a side opposite to the object to be packaged, to package the object to be packaged.

In the case of a deep-drawn package, for example, a deep-drawn formed body (that is, the base material) of the laminated film and the laminated film or another resin film (that is, the lid material) form a storage section for storing an object to be packaged (in other words, a storage item) to store the object to be packaged, and regions of the formed body and the film other than the storage section are heat-sealed to produce the deep-drawn package.

Not only in the case of the deep-drawn package, but also in the production of any package, a sealing temperature during heat sealing is preferably 105°C to 135°C, and a sealing pressure is preferably 0.3 to 0.6 MPa.

Not only in the case of the deep-draw package, but also when the base material is produced by thermoforming the laminated film, the thermoforming can be performed by a known method. For example, a forming temperature during the thermoforming is preferably 90°C to 120°C.

### Examples

Hereinafter, the present invention will be described in more detail by way of specific Examples. However, the present invention is not intended to be limited to the following Examples.

Resins used in each of examples and comparative examples are as follows.
LLDPE: Linear low-density polyethylene having a constitutional unit derived from octene ("ELITE 5220G" manufactured by The Dow Chemical Company, density: 0.915 g/cm³, MFR: 3.5 g/10 min, melting point: 123°C)
LDPE: Low-density polyethylene ("SUMIKATHENE (registered trademark) L211" manufactured by Sumitomo Chemical Co., Ltd., density: 0.924 g/cm³, MFR: 2 g/10 min, melting point: 112°C)
HDPE: High-density polyethylene ("HI-ZEX 2200J" manufactured by Prime Polymer Co., Ltd., density: 0.964 g/cm³, MFR: 5.2 g/10 min, melting point: 133°C)
hPP: Homopolypropylene ("Prime Polypro F-300SP" manufactured by Prime Polymer Co., Ltd., melting point: 163°C)
EVA: Ethylene-vinyl acetate copolymer ("EVAFLEX (registered trademark) P1007" manufactured by Dow-Mitsui Polychemicals Co., Ltd., melting point: 94°C, MFR: 9.0 g/10 min)
Ny: 6-nylon ("1022B" manufactured by UBE Corporation)
Modified PE: Ccid-modified polyethylene (adhesive resin, "NF536" manufactured by Mitsui Chemicals, Inc.)

### [Example 1]

### <Production of Resin Composition>

The HDPE (50 parts by mass) and the LLDPE (50 parts by mass) were mixed at room temperature to produce a resin composition (1).

### <<Production of Laminated Film>>

A laminated film having the configuration shown in FIG. 1 was produced according to the following procedure.

That is, the LLDPE, the LLDPE, and the resin composition (1) were co-extruded in this order to obtain a laminated film (thickness: 150 µm) in which a first resin layer (thickness: 7.5 µm), a third resin layer (thickness: 135 µm), and a second resin layer (thickness: 7.5 µm) were laminated in this order in the thickness direction. All of the first resin layer, the third resin layer, and the second resin layer are non-stretched layers.

### <<Evaluation of Laminated Film>>

### <Evaluation of Pinhole Resistance>

A first test piece having a size of A4 paper size standard (210 mm × 297 mm) was cut out from the laminated film obtained above.

The first test piece was subjected to a gelbo flex test under conditions of a temperature of 23°C and 2,000 twisting cycles in accordance with ASTM F392. Then, the first test piece after the test was visually observed, the number of pinholes (pieces) observed in the first test piece (laminated film) was checked, and the pinhole resistance of the laminated film was evaluated according to the following criteria. The results are shown in Table 1 in the column "Pinhole resistance of laminated film (number of pinholes (pieces))", together with the number of pinholes (pieces).

### (Evaluation Criteria)

A: The number of pinholes is 0 to 1, and the pinhole resistance of the laminated film is extremely high.
B: The number of pinholes is 2, and the laminated film has high pinhole resistance.
C: The number of pinholes is 3 or more, and the pinhole resistance of the laminated film is low.

### <Measurement of Puncture Strength>

A tip part of a needle made of stainless steel and having a curvature radius of 0.5 mm in the tip part was pierced into the laminated film obtained above from the second resin layer side and was pushed perpendicularly to the laminated film at a speed of 50 mm/min. At the moment when the needle penetrated the laminated film, a load applied to the needle was read, and this read value was used as the puncture strength of the laminated film. The results are shown in Table 1 in the column "Puncture strength of laminated film (N)".

### <<Production of Package>>

### <Production of Base Material>

The laminated film obtained above was thermoformed using a deep-drawing packaging machine ("R535" manufactured by MULTIVAC) and a die having a length of 108 mm and a width of 150 mm under conditions of a forming temperature of 95°C and a drawing depth of 30 mm to produce a base material.

### <Production of Package>

A medical packaging material ("Tyvek (registered trademark) 1073B" manufactured by DuPont) was prepared as a lid material. As an object to be packaged, a needleless plastic syringe (11.8 g) was prepared.

The lid material and the base material obtained above were heat-sealed under the following conditions, and the syringe was packaged to produce a package (deep-drawn package).

### (Heating sealing conditions)

Sealing pressure: 0.45 MPa (4.5 kgf/cm²)
Sealing time: 3.5 seconds
Sealing temperature: 125°C

### <<Evaluation of Package>>

### <Evaluation of Durability>

The package obtained above was reciprocated 50 times with a swing amplitude of 30 cm in a longitudinal direction of the syringe and with enough strength to move the syringe in the longitudinal direction within the package. Thereafter, the package was visually observed, and the durability of the package was evaluated according to the following criteria. The results are shown in Table 1 in the column "Durability of package".

### (Evaluation Criteria)

A: Little or no deformation of the package due to the puncture of the tip of the syringe is observed, and the package has high durability.
B: Clear deformation or puncture of the package due to the puncture of the tip of the syringe is observed, and the package has low durability.

### [Example 2]

### <Production of Resin Composition>

The EVA (85 parts by mass) and the hPP (15 parts by mass) were mixed at room temperature to produce a resin composition (2).

### <<Production of Laminated Film>>

A laminated film having the configuration shown in FIG. 1 was produced according to the following procedure.

That is, the resin composition (2), the LLDPE, and the resin composition (1) were co-extruded in this order to obtain a laminated film (thickness: 150 µm) in which a first resin layer (thickness: 7.5 µm), a third resin layer (thickness: 135 µm), and a second resin layer (thickness: 7.5 µm) were laminated in this order in the thickness direction. All of the first resin layer, the third resin layer, and the second resin layer are non-stretched layers.

### <<Evaluation of Laminated Film>>

The laminated film obtained above was evaluated in the same manner as in Example 1. The results are shown in Table 1.

### <Production and Evaluation of Package>

A package was produced in the same manner as in Example 1, except that the laminated film obtained above was used.

The obtained package was evaluated in the same manner as in Example 1. The results are shown in Table 1.

### [Comparative Example 1]

### <<Production of Laminated Film>>

The LLDPE, the modified PE, and the Ny were co-extruded in this order to obtain a laminated film (thickness: 150 µm) in which a first resin layer (thickness: 106.5 µm), a third resin layer (thickness: 22.5 µm), and a second resin layer (thickness: 21 µm) were laminated in this order in the thickness direction. All of the first resin layer, the third resin layer, and the second resin layer are non-stretched layers.

### <<Evaluation of Laminated Film>>

The laminated film obtained above was evaluated in the same manner as in Example 1. The results are shown in Table 1.

### <Production and Evaluation of Package>

A package was produced in the same manner as in Example 1, except that the laminated film obtained above was used.

The obtained package was evaluated in the same manner as in Example 1. The results are shown in Table 1.

### [Comparative Example 2]

### <Production of Single-layer Film>

The LDPE was subjected to extrusion molding to obtain a single-layer film (thickness: 150 µm) consisting of a non-stretched layer.

### <<Evaluation of Single-Layer Film>>

The single-layer film obtained above was evaluated in the same manner as in the laminated film of Example 1. The results are shown in Table 2.

### <Production and Evaluation of Package>

A package was produced in the same manner as in Example 1, except that the single-layer film obtained above was used instead of the laminated film.

The obtained package was evaluated in the same manner as in Example 1. The results are shown in Table 2.

In Table 2, the single-layer film of the present comparative example is shown in the column for the first resin layer for convenience.

### [Comparative Example 3]

### <<Production of Laminated Film>>

A laminated film (thickness: 150 µm) in which a first resin layer (thickness: 7.5 µm), a third resin layer (thickness: 124.5 µm), and a second resin layer (thickness: 18 µm) were laminated in this order in the thickness direction was obtained in the same manner as in Example 1, except that the conditions for co-extrusion of the resins were changed so that the thickness of the second resin layer was increased and the thickness of the third resin layer was decreased compared to Example 1. All of the first resin layer, the third resin layer, and the second resin layer are non-stretched layers.

### <<Evaluation of Laminated Film>>

The laminated film obtained above was evaluated in the same manner as in Example 1. The results are shown in Table 2.

### <Production and Evaluation of Package>

A package was produced in the same manner as in Example 1, except that the laminated film obtained above was used.

The obtained package was evaluated in the same manner as in Example 1. The results are shown in Table 2.

**[Table 1]**

| | | | Example 1 | Example 2 | Comparative Example 1 |
|---|---|---|---|---|---|
| Configuration of laminated film or single-layer film | Second resin layer | Contained components (mass%) | HDPE/LLDPE (50/50) | HDPE/LLDPE (50/50) | Ny (100) |
| | | Ratio of thickness (%) | 5 | 5 | 14 |
| | Third resin layer | Contained components (mass%) | LLDPE (100) | LLDPE (100) | Modified PE (100) |
| | | Ratio of thickness (%) | 90 | 90 | 15 |
| | First resin layer | Contained components (mass%) | LLDPE (100) | EVA/hPP (85/15) | LLDPE (100) |
| | | Ratio of thickness (%) | 5 | 5 | 71 |
| | Overall thickness (µm) | | 150 | 150 | 150 |
| Evaluation results | Pinhole resistance of laminated film (number of pinholes (pieces)) | | A (1) | A (1) | C (6) |
| | Puncture strength of laminated film (N) | | 10.2 | 10.3 | 10.8 |
| | Durability of package | | A | A | A |

**[Table 2]**

| | | | Comparative Example 2 | Comparative Example 3 |
|---|---|---|---|---|
| Configuration of laminated film or single-layer film | Second resin layer | Contained components (mass%) | - | HDPE/LLDPE (50/50) |
| | | Ratio of thickness (%) | - | 12 |
| | Third resin layer | Contained components (mass%) | - | LLDPE (100) |
| | | Ratio of thickness (%) | - | 83 |
| | First resin layer | Contained components (mass%) | LDPE (100) | LLDPE (100) |
| | | Ratio of thickness (%) | 100 | 5 |
| | Overall thickness (µm) | | 150 | 150 |
| Evaluation results | Pinhole resistance of laminated film (number of pinholes (pieces)) | | A (0) | C (4) |
| | Puncture strength of laminated film (N) | | 4.8 | 10.0 |
| | Durability of package | | B | A |

As is clear from the above results, in Examples 1 and 2, the number of pinholes observed in the laminated film after the Gelbo Flex test was 1, and the laminated film had extremely high pinhole resistance.

Furthermore, in Examples 1 and 2, the puncture strength of the laminated film was 10.2 N or more (10.2 to 10.3 N), which was sufficiently high.

Furthermore, in Examples 1 and 2, the durability of the package was high.

In Examples 1 and 2, the ratio of the thickness of the third resin layer to the thickness of the laminated film was 90%.

Furthermore, in Examples 1 and 2, the first resin layer, the second resin layer, and the third resin layer in the laminated film contained the same kind of polyolefin-based resin, and the reusability of the laminated film was high.

Contrary to this, in Comparative Examples 1 and 3, the number of pinholes observed in the laminated film after the Gelbo flex test was 4 or more (4 to 6), and the pinhole resistance of the laminated film was low. In Comparative Example 1, the ratio of the thickness of the third resin layer to the thickness of the laminated film was 15%, and the third resin layer was an adhesive layer containing an adhesive resin as a main component.

In Comparative Example 3, the ratio of the thickness of the third resin layer to the thickness of the laminated film was 83%.

Furthermore, in Comparative Example 1, the second resin layer in the laminated film did not contain the same kind of polyolefin-based resin, and the reusability of the laminated film was low.

In Comparative Example 2, the puncture strength of the single-layer film was 4.8 N, which was low. Furthermore, in Comparative Example 2, the durability of the package was low.

The single-layer film of Comparative Example 2 was an LDPE film.

### INDUSTRIAL APPLICABILITY

The present invention can be used to produce various packages that can be reused after use.

### REFERENCE SIGNS LIST

1 Laminated film
11 First resin layer
12 Second resin layer
13 Third resin layer
101 Package
8 Lid material
10 Base material
T₁ Thickness of laminated film
T₁₃ Thickness of third resin layer

## Claims

1. A laminated film comprising:
a first resin layer, a third resin layer, and a second resin layer that are laminated in this order in a thickness direction,
wherein the first resin layer, the second resin layer, and the third resin layer contain the same kind of polyolefin-based resin,
a ratio of a thickness of the third resin layer to a thickness of the laminated film is more than 85%,
when a Gelbo flex test is conducted on the laminated film under conditions of a temperature of 23°C and 2,000 twisting cycles in accordance with ASTM F392, the number of pinholes observed in the laminated film after the Gelbo flex test is 2 or less, and
a puncture strength of the laminated film is 6 N or more.

2. The laminated film according to Claim 1,
wherein the third resin layer contains, as the polyolefin-based resin, either one or both of linear low-density polyethylene having a constitutional unit derived from octene and metallocene-catalyzed linear low-density polyethylene having a constitutional unit derived from octene.

3. The laminated film according to Claim 1 or 2,
wherein the first resin layer is a non-easy-peel type sealant layer containing, as the polyolefin-based resin, one or two or more kinds selected from the group consisting of polyethylene and an ethylene-based copolymer.

4. The laminated film according to Claim 3,
wherein the first resin layer contains, as the polyolefin-based resin, one or two or more kinds selected from the group consisting of low-density polyethylene, linear low-density polyethylene, metallocene-catalyzed linear low-density polyethylene, and an ethylene-vinyl acetate copolymer.

5. The laminated film according to Claim 4,
wherein the second resin layer contains, as the polyolefin-based resin, high-density polyethylene and one or two or more kinds selected from the group consisting of low-density polyethylene, linear low-density polyethylene, and metallocene-catalyzed linear low-density polyethylene.

6. The laminated film according to Claim 1 or 2,
wherein the first resin layer is an easy-peel layer containing, as the polyolefin-based resin, one or two or more kinds selected from the group consisting of polyethylene and an ethylene-based copolymer, and one or two or more kinds selected from the group consisting of homopolypropylene and a polypropylene-based copolymer.

7. The laminated film according to Claim 6,
wherein the first resin layer contains, as the polyolefin-based resin, an ethylene-vinyl acetate copolymer and homopolypropylene.

8. The laminated film according to Claim 7,
wherein the second resin layer contains, as the polyolefin-based resin, high-density polyethylene and one or two or more kinds selected from the group consisting of low-density polyethylene, linear low-density polyethylene, and metallocene-catalyzed linear low-density polyethylene.

9. A package formed using the laminated film according to Claim 1 or 2.
